(19) Europäisches Patentamt
European Patent Office
Office européen des brevets

(11) **EP 4 542 991 A1**

(12) **EUROPEAN PATENT APPLICATION**
published in accordance with Art. 153(4) EPC

(43) Date of publication:
**23.04.2025 Bulletin 2025/17**

(21) Application number: **23834617.5**

(22) Date of filing: **16.06.2023**

(51) International Patent Classification (IPC):
**H04N 19/13** (2014.01)        **G10L 25/30** (2013.01)

(52) Cooperative Patent Classification (CPC):
**G10L 25/30; H04N 19/13; H04N 19/91**

(86) International application number:
**PCT/CN2023/100760**

(87) International publication number:
**WO 2024/007843 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 CN 202210806919**

(71) Applicant: **Huawei Technologies Co., Ltd.
Shenzhen, Guangdong 518129 (CN)**

(72) Inventors:
• **SHI, Yibo
  Shenzhen, Guangdong 518129 (CN)**
• **HUANG, Yunqi
  Shenzhen, Guangdong 518129 (CN)**
• **WANG, Jing
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **ENCODING METHOD AND APPARATUS, DECODING METHOD AND APPARATUS, AND COMPUTER DEVICE**

(57) This application discloses an encoding and decoding method and apparatus, and a computer device, and is applied to the field of image processing technologies. In the method, a feature map of an image (the feature map includes a plurality of elements) is obtained through an encoding network. A boundary value of a first element in the feature map is determined, and a target range corresponding to the first element is determined based on the boundary value. If the first element is in the target range corresponding to the first element, entropy encoding is performed on the first element. If the first element is outside the target range corresponding to the first element, the first element is modified to the boundary value corresponding to the first element, and entropy encoding is performed on the modified first element, or the first element is marked as an out-of-bounds element, and variable-length code encoding is performed on the first element. In the foregoing method, a boundary value corresponding to each element is determined, and a target range corresponding to each element is narrowed. This reduces complexity of entropy encoding and decoding. For an out-of-bounds element, the out-of-bounds element is modified to a boundary value and then entropy encoding is performed, so that entropy encoding is performed on each element to ensure image compression performance.

An encoder side inputs an image into an encoding network to obtain a feature map of the image, where the feature map includes a plurality of elements — 401

The encoder side determines a boundary value of a first element in the feature map, where the first element is any one of the plurality of elements — 402

The encoder side determines whether the first element is in a target range corresponding to the first element — 403

Yes

The encoder side performs entropy encoding on the first element — 404a

No

The encoder side modifies the first element to the boundary value corresponding to the first element, and performs entropy encoding on a modified first element — 404b

FIG. 4

Description

CROSS-REFERENCE TO RELATED APPLICATIONS

This application claims priority to Chinese Patent Application No. 202210806919.4 filed with the China National Intellectual Property Administration on July 8, 2022, and entitled "ENCODING AND DECODING METHOD AND APPARATUS, AND COMPUTER DEVICE", which is incorporated herein by reference in its entirety.

TECHNICAL FIELD

This application relates to the field of image processing technologies, and in particular, to an encoding and decoding method and apparatus, and a computer device.

BACKGROUND

Image compression is a technology of representing an original image pixel matrix with fewer bits in a lossy or lossless manner by using image data features such as spatial redundancy, visual redundancy, and statistical redundancy, implements effective transmission and storage of image information, and is important in a media era where a type and a data volume of image transmission information are increasing. Image compression is classified into lossy compression and lossless compression. Lossy compression achieves a large compression ratio at costs of image quality deterioration. Lossless compression does not cause image detail loss, but a compression ratio is usually higher than that of lossy compression.

In a conventional lossy image compression algorithm, a plurality of technologies are used to remove redundant information of image data. For example, a quantization technology is used to eliminate spatial redundancy caused by correlation between adjacent pixels in an image and visual redundancy determined by perception of a human visual system, and an entropy encoding technology is used to eliminate statistical redundancy of image data. After decades of research and optimization by persons skilled in a related field, mature lossy image compression standards such as JPEG and BPG are formed in a conventional lossy image compression technology. However, the conventional image compression technology also encounters a bottleneck in improving encoding efficiency, and cannot meet increasing requirements of multimedia application data.

In an image compression process, entropy encoding and entropy decoding are time-consuming steps. How to optimize efficiency of entropy encoding and entropy decoding and how to optimize efficiency of entropy encoding and entropy decoding in combination with a feature of artificial intelligence (artificial intelligence, AI) compression become one of important research issues.

SUMMARY

Embodiments of this application provide an encoding and decoding method and apparatus, and a computer device, to simplify complexity of entropy encoding and entropy decoding, and improve a speed of entropy encoding and entropy decoding.

According to a first aspect, an embodiment of this application provides an encoding method, including: inputting an image into an encoding network to obtain a feature map of the image, where the feature map includes a plurality of elements; determining a boundary value of a first element in the feature map, where the first element is any one of the plurality of elements; judging whether the first element is in a target range corresponding to the first element, where the target range is determined based on the boundary value of the first element; and if the first element is in the target range corresponding to the first element, performing entropy encoding on the first element; and if the first element is outside the target range corresponding to the first element, modifying the first element to the boundary value corresponding to the first element, and performing entropy encoding on the modified first element.

In the foregoing method embodiment, an encoder side obtains the feature map of the image through the encoding network; determines a boundary value of each element in the feature map; determines, based on the boundary value of each element, a target range corresponding to each element; if a value of an element is in a target range corresponding to the element, performs entropy encoding on the element; and if the value of the element is outside the target range corresponding to the element, modify the value of the element to the boundary value corresponding to the element, and perform entropy encoding on the modified element. In the foregoing method, determining the boundary value corresponding to each element helps narrow the target range corresponding to each element, and the boundary value is at an element level. In other words, the boundary value determined for the element is applicable only to the element, and is not applicable to another element. Therefore, a probability distribution feature of each element can be more accurately reflected. Because the target range is narrowed down, complexity of probability distribution of the element in the target range is reduced, so that complexity of entropy encoding can be reduced, and an entropy encoding speed can be improved. For the element that is outside the target range, in an existing entropy encoding optimization manner, entropy encoding is not performed on an out-of-bounds element, but a value of the out-of-bounds element is directly written into a bitstream. This is equivalent to that special fixed-length code encoding is used, and a large quantity of bits need to be occupied. However, in the foregoing method embodiment of this application, after a value of the element that is outside the target range is modified, entropy encoding is still performed on the element, and information compression is performed when an information loss is not obvious. In addition, because a probability of a value of the first element before modification is small, when the probability is quantized, a large error is generated, and a probability of another value with a high probability is reduced. After the first element is modified to the boundary value, it is equivalent to combining probabilities of several values that exceed the boundary, a quantization error generated when quantization is performed again is small, and impact on a high probability value is reduced. This helps avoid a quantization error generated when a low probability value is quantized.

In a possible implementation, the boundary value includes an upper boundary value and/or a lower boundary value; and the modifying the first element to the boundary value corresponding to the first element includes: if the first element is greater than the upper boundary value, modifying the first element to the upper boundary value; or if the first element is less than the lower boundary value, modifying the first element to the lower boundary value. In this implementation, only the upper boundary value may be set, and only the first element is compared with the upper boundary value. Alternatively, only the lower boundary value may be set, and only the first element is compared with the lower boundary value. Alternatively, the upper boundary value and the lower boundary value may further be set, and the first element needs to be separately compared with the upper boundary value and the lower boundary value. Therefore, entropy encoding can be finally performed on a value in the target range, to simplify entropy encoding complexity and improve the entropy encoding speed.

In a possible implementation, the determining a boundary value of a first element in the feature map includes: inputting the feature map into an entropy estimation network, where the entropy estimation network outputs a probability distribution model of the first element in the feature map; and determining the boundary value of the first element based on the probability distribution model of the first element. The entropy estimation network can output the probability distribution model of the first element. For example, when a Gaussian distribution model is used, the entropy estimation network may output an average value and the variance of the first element. The encoder side determines the boundary value of the first element based on the probability distribution model of the first element, so that a value with a low probability can be filtered out as much as possible from the determined boundary value, thereby avoiding a complex entropy encoding process.

In a possible implementation, the determining the boundary value of the first element based on the probability distribution model of the first element includes: determining the boundary value of the first element based on a variance of the probability distribution model of the first element. The variance can be used to measure a data dispersion degree, and the boundary value is determined based on the variance, so that the boundary value that can filter out the value with a low probability can be obtained.

In a possible implementation, the boundary value includes the upper boundary value and/or the lower boundary value; the upper boundary value in the boundary value is $k \times \sigma$, and/or the lower boundary value in the boundary value is $-k \times \sigma$; and $k$ is a constant, and $\sigma$ represents the variance of the probability distribution model.

In a possible implementation, the determining a boundary value of a first element in the feature map includes: inputting the feature map into an entropy estimation network, where the entropy estimation network outputs a probability distribution model of the first element and the boundary value of the first element. In this implementation, the entropy estimation network may alternatively be trained in advance, so that the entropy estimation network can output both the probability distribution model of the first element and the boundary value, and the output boundary value usually better meets a requirement for improving entropy encoding performance.

In a possible implementation, the method further includes: quantizing the first element; the determining whether the first element is in a target range corresponding to the first element includes: determining whether the quantized first element is in the target range corresponding to the first element; and the performing entropy encoding on the first element includes: performing entropy encoding on the quantized first element.

In a possible implementation, the performing entropy encoding on the first element includes: determining a probability that the first element is in the target range, and performing entropy encoding on the first element. Optionally, a probability of the first element and a probability of the target range may be first determined based on the probability distribution model that is of the first element and that is output by the entropy estimation network, and entropy encoding is performed on the first element based on a ratio of the probability of the first element to the probability of the target range. The probability of the target range may be obtained by subtracting a probability that a value is less than the lower boundary from a probability that the value is less than the upper boundary.

In a possible implementation, the probability distribution model is the Gaussian distribution model.

According to a second aspect, an embodiment of this application provides an encoding method, including: inputting an image into an encoding network to obtain a feature map of the image, where the feature map includes a plurality of elements; determining a boundary value of a first element in the feature map, where the first element is any one of the plurality of elements; judging whether the first element is in a target range corresponding to the first element, where the target range is determined based on the boundary value of the first element; and if the first element is in the target range corresponding to the first element, performing entropy encoding on the first element; or if the first element is outside the target range corresponding to the first element, marking the first element as an out-of-bounds element, and performing variable-length code encoding on the first element.

In the foregoing method embodiment, an encoder side obtains the feature map of the image through the encoding network; determines a boundary value of each element in the feature map; determines, based on the boundary value of each element, a target range corresponding to each element; if a value of an element is in a target range corresponding to the element, performs entropy encoding on the element; and if the value of the element is outside the target range corresponding to the element, marking the first element as the out-of-bounds element, and performing variable-length code encoding on the first element. In the foregoing method, the boundary value corresponding to each element is determined, to help narrow the target range corresponding to each element. Because the target range is narrowed down, complexity of probability distribution of the element in the target range is reduced, so that complexity of entropy encoding can be reduced, and an entropy encoding speed can be improved. For the out-of-bounds element, in an existing entropy encoding optimization manner, a fixed-length code encoding is used, and a large quantity of bits need to be occupied. However, in the foregoing embodiment of this application, variable-length code encoding is performed on the out-of-bounds element, to help improve compression performance. In particular, variable-length code encoding is performed on a difference between the out-of-bounds element and a boundary, to further help reduce a quantity of bits required after encoding, and further improve compression performance.

In a possible implementation, the marking the first element as an out-of-bounds element includes: encoding, into a bitstream, flag information indicating that the first element is the out-of-bounds element. The bitstream includes encoding information obtained by performing entropy encoding on the first element, or encoding information obtained by performing variable-length code encoding on the first element. In addition, the bitstream may further include bitstream information obtained by performing entropy encoding on another non-out-of-bounds element, and encoding information obtained by performing variable-length code encoding on the another out-of-bounds element.

In a possible implementation, the boundary value includes an upper boundary value and/or a lower boundary value; and the performing variable-length code encoding on the first element includes: if the first element is greater than the upper boundary value, determining a first difference between the first element and the upper boundary value, and performing variable-length code encoding on the first difference; or if the first element is less than the lower boundary value, determining a second difference between the first element and the lower boundary value, and performing variable-length code encoding on the second difference. In this implementation, only the upper boundary value may be set, and only the first element is compared with the upper boundary value. Alternatively, only the lower boundary value may be set, and only the first element is compared with the lower boundary value. Alternatively, the upper boundary value and the lower boundary value may further be set, and the first element needs to be separately compared with the upper boundary value and the lower boundary value, determine a difference between the first element and the boundary.

In a possible implementation, the determining a boundary value of a first element in the feature map includes: inputting the feature map into an entropy estimation network, where the entropy estimation network outputs a probability distribution model of the first element in the feature map; and determining the boundary value of the first element based on the probability distribution model of the first element.

In a possible implementation, the determining the boundary value of the first element based on the probability distribution model of the first element includes: determining the boundary value of the first element based on a variance of the probability distribution model of the first element.

In a possible implementation, the boundary value includes the upper boundary value and/or the lower boundary value; the upper boundary value in the boundary value is $k \times \sigma$, and/or the lower boundary value in the boundary value is $-k \times \sigma$; and $k$ is a constant, and $\sigma$ represents the variance of the probability distribution model.

In a possible implementation, the determining a boundary value of a first element in the feature map includes: inputting the feature map into an entropy estimation network, where the entropy estimation network outputs a probability distribution model of the first element and the boundary value of the first element.

In a possible implementation, the method further includes: quantizing the first element; the determining whether the first element is in a target range corresponding to the first element includes: determining whether the quantized first element is in the target range corresponding to the first element; and the performing entropy encoding on the first element includes: performing entropy encoding on the quantized first element.

In a possible implementation, the performing entropy encoding on the first element includes: determining a probability that the first element is in the target range, and performing entropy encoding on the first element. Optionally, a probability of the first element and a probability of the target range may be first determined based on the probability distribution model that is of the first element and that is output by the entropy estimation network, and entropy encoding is performed on the first element based on a ratio of the probability of the first element to the probability of the target range.

The probability of the target range may be obtained by subtracting a probability that a value is less than the lower boundary from a probability that the value is less than the upper boundary.

In a possible implementation, the probability distribution model is a Gaussian distribution model.

According to a third aspect, an embodiment of this application provides a decoding method, including: obtaining a bitstream, where the bitstream includes information obtained through encoding a plurality of elements; determining whether a first element in the bitstream is an out-of-bounds element, where the first element is any one of the plurality of elements; and if the first element is the out-of-bounds element, performing variable-length code decoding on information obtained through encoding the first element, to obtain the first element; or if the first element is not the out-of-bounds element, performing entropy decoding on the information obtained through encoding the first element, to obtain the first element.

A decoder side determines whether the first element is the out-of-bounds element, that is, determines whether the first element is in the target range corresponding to the first element. If the first element is in the target range, the first element is not the out-of-bounds element. If the first element is outside the target range, the first element is the out-of-bounds element.

In a possible implementation, the determining whether a first element in the bitstream is an out-of-bounds element includes: if the bitstream includes information indicates that the first element is the out-of-bounds element, determining that the first element is the out-of-bounds element.

In a possible implementation, the performing variable-length code decoding on information obtained through encoding the first element, to obtain the first element includes: determining a boundary value of the first element; performing variable-length code decoding on the information obtained through encoding the first element, to obtain a difference, where the difference is a difference between the first element and an upper boundary value in the boundary value, or is a difference between the first element and a lower boundary value in the boundary value; and determining the first element based on the boundary value and the difference.

In a possible implementation, the determining a boundary value of the first element includes: determining a probability distribution model of the first element; and determining the boundary value of the first element based on the probability distribution model of the first element.

In a possible implementation, the determining the boundary value of the first element based on the probability distribution model of the first element includes: determining the boundary value of the first element based on a variance of the probability distribution model of the first element.

In a possible implementation, the boundary value includes the upper boundary value and/or the lower boundary value; the upper boundary value in the boundary value is $k\times\sigma$, and/or the lower boundary value in the boundary value is $-k\times\sigma$; and $k$ is a constant, and $\sigma$ represents the variance of the probability distribution model.

In a possible implementation, the determining a boundary value of the first element includes: inputting the bitstream into an entropy estimation network, where the entropy estimation network outputs the boundary value of the first element.

According to a fourth aspect, an embodiment of this application provides an encoding apparatus. The apparatus includes modules/units for performing the method according to any one of the first aspect and the possible implementations of the first aspect. The modules/units may be implemented by hardware, or may be implemented by hardware executing corresponding software.

For example, the encoding apparatus may include: an encoding network module, configured to output a feature map of an input image, where the feature map includes a plurality of elements; a determining module, configured to determine a boundary value of a first element in the feature map, where the first element is any one of the plurality of elements; a judging module, configured to judge whether the first element is in a target range corresponding to the first element, where the target range is determined based on the boundary value of the first element; and an encoding module, configured to: when the first element is in the target range corresponding to the first element, perform entropy encoding on the first element; and when the first element is outside the target range corresponding to the first element, modify the first element to the boundary value corresponding to the first element, and perform entropy encoding on the modified first element.

According to a fifth aspect, an embodiment of this application provides an encoding apparatus. The apparatus includes modules/units for performing the method according to any one of the second aspect and the possible implementations of the second aspect. The modules/units may be implemented by hardware, or may be implemented by hardware executing corresponding software.

For example, the encoding apparatus may include an encoding network module, configured to output a feature map of an input image, where the feature map includes a plurality of elements; a boundary determining module, configured to determine a boundary value of a first element in the feature map, where the first element is any one of the plurality of elements; a judging module, configured to judge whether the first element is in a target range corresponding to the first element, where the target range is determined based on the boundary value of the first element; and an entropy encoding module, configured to: when the first element is in the target range corresponding to the first element, perform entropy encoding on the first element; or when the first element is outside the target range corresponding to the first element, mark the first element as an out-of-bounds element, and perform variable-length code encoding on the first element.

According to a sixth aspect, an embodiment of this application provides a decoding apparatus. The apparatus includes modules/units for performing the method according to any one of the third aspect and the possible implementations of the third aspect. The modules/units may be implemented by hardware, or may be implemented by hardware executing corresponding software.

For example, the decoding apparatus may include: an obtaining module, configured to obtain a bitstream, where the bitstream includes information obtained through encoding a plurality of elements; a determining module, configured to determine whether a first element in the bitstream is an out-of-bounds element, where the first element is any one of the plurality of elements; and a decoding module, configured to: when the first element is the out-of-bounds element, perform variable-length code decoding on information obtained through encoding the first element, to obtain the first element; or when the first element is not the out-of-bounds element, perform entropy decoding on information obtained through encoding the first element, to obtain the first element.

According to a seventh aspect, an embodiment of this application provides an encoder. The encoder includes a processing circuit, configured to perform the encoding method according to any one of the first aspect, the second aspect, and the implementations of the first aspect and the second aspect.

According to an eighth aspect, an embodiment of this application provides a decoder. The decoder includes a processing circuit, configured to perform the decoding method according to any one of the third aspect and the implementations of the third aspect.

According to a ninth aspect, an embodiment of this application provides an encoder, including: one or more processors; and a computer-readable storage medium coupled to the one or more processors, where the computer-readable storage medium storing a program. When executed by the one or more processors, the program enables the encoder to perform the encoding method according to any one of the first aspect, the second aspect, and the implementations of the first aspect and the second aspect.

According to a tenth aspect, a decoder is provided, including: one or more processors; and a computer-readable storage medium coupled to the one or more processors, where the computer-readable storage medium storing a program. When executed by the one or more processors, the program enables the decoder to perform the decoding method according to any one of the third aspect and the implementations of the third aspect.

According to an eleventh aspect, an embodiment of this application provides a computer-readable storage medium. The computer-readable storage medium stores instructions. When the instructions are run on a computer, the computer is enabled to perform the method according to any one of the first aspect, the second aspect, the third aspect, and the implementations of the first aspect, the second aspect, and the third aspect.

According to a twelfth aspect, an embodiment of this application provides a computer program product including instructions. When the computer program product runs on a computer, the method according to any one of the first aspect, the second aspect, the third aspect, and the implementations of the first aspect, the second aspect, and the third aspect is performed.

According to a thirteenth aspect, an embodiment of this application provides a computer-readable storage medium. The computer-readable storage medium stores a bitstream, and the bitstream is generated according to the encoding method in any one of the first aspect or the second aspect, and the possible implementations of the first aspect and the second aspect..

According to a fourteenth aspect, an embodiment of this application provides a computer-readable storage medium. The computer-readable storage medium stores a bitstream. The bitstream includes program instructions executable by a decoder, and the program instructions enable the decoder to perform the decoding method according to any one of the third aspect and the possible implementations of the third aspect.

According to a fifteenth aspect, an embodiment of this application provides a decoding system. The decoding system includes at least one memory and a decoder. The at least one memory is configured to store a bitstream, and the decoder is configured to perform the decoding method according to any one of the third aspect and the possible implementations of the third aspect.

According to a sixteenth aspect, an embodiment of this application provides a bitstream storage method. The method includes: receiving or generating a bitstream, and storing the bitstream in a storage medium.

In a possible implementation, the method further includes: performing format conversion processing on the bitstream to obtain a format-converted bitstream, and storing the format-converted bitstream in the storage medium.

According to a seventeenth aspect, an embodiment of this application provides a bitstream transmission method. The method includes: receiving or generating a bitstream, and transmitting the bitstream to a cloud server, or transmitting the bitstream to a mobile terminal.

**BRIEF DESCRIPTION OF DRAWINGS**

FIG. 1 is a schematic flowchart of a VAE method;
FIG. 2 is a schematic flowchart of an entropy encoding optimization method based on probability distribution;
FIG. 3 is a diagram of a scenario according to an embodiment of this application;
FIG. 4 is a schematic flowchart of an encoding method according to an embodiment of this application;
FIG. 5 is a diagram of an encoding network and a decoding network according to an embodiment of this application;
FIG. 6 is a diagram of an entropy estimation network according to an embodiment of this application;
FIG. 7 is a schematic flowchart of a decoding method according to an embodiment of this application;
FIG. 8 is a diagram of comparison of encoding effect according to an embodiment of this application;
FIG. 9 is a diagram of comparison of decoding effect according to an embodiment of this application;
FIG. 10 is a schematic flowchart of another encoding method according to an embodiment of this application;
FIG. 11 is a schematic flowchart of another decoding method according to an embodiment of this application;
FIG. 12 is a diagram of a structure of an encoding apparatus according to an embodiment of this application;
FIG. 13 is a diagram of a structure of another encoding apparatus according to an embodiment of this application;
FIG. 14 is a diagram of a structure of a decoding apparatus according to an embodiment of this application; and
FIG. 15 is a diagram of a structure of a computer device according to an embodiment of this application.

**DESCRIPTION OF EMBODIMENTS**

Performance of AI is better than that of a conventional image algorithm in a plurality of fields such as image recognition and target detection. Therefore, deep learning is also used to implement image compression. Different from those in the conventional image algorithm that optimizes processing steps such as inter-image transformation (that is, transformation from an original image to a feature map), quantization, and entropy encoding through manual design, modules (such as an encoding network, an entropy estimation network, and a decoding network) of an AI image compression algorithm are optimized as a whole. Therefore, an AI image compression solution has better compression effect.

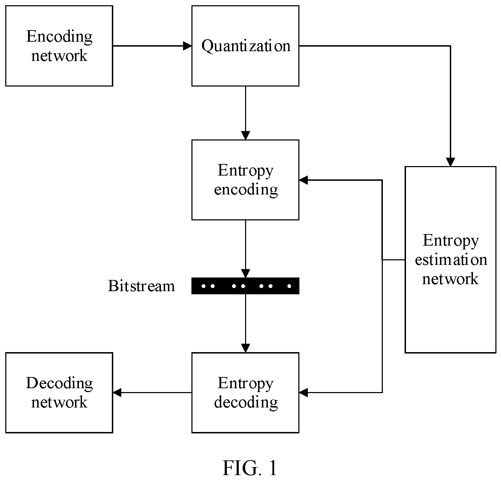

A variational auto encoder (variational auto encoder, VAE) method is a mainstream technical solution of a current lossy AI image compression technology. The method is better than a conventional lossy image compression technology like JPEG in two image compression effect evaluation indicators: a multi-scale structural similarity (multi-scale structural similarity, MS-SSIM) and a peak signal to noise ratio (peak signal to noise ratio, PSNR). A main procedure of the VAE method may be shown in FIG. 1.

An encoding procedure may include the following steps.

(1) An encoder side inputs an image into an encoding network, and the encoding network outputs a feature map of the image. The encoding network is responsible for converting the image into a feature representation of another space, and removing noise, high frequency information, and the like from the image.
(2) The encoder side quantizes the feature map, for example, rounds off a feature value in the feature map, to obtain a quantized to-be-encoded feature map $\hat{y}$.
(3) The encoder side obtains probability distribution of each element in $\hat{y}$ by using an entropy estimation network.
(4) The encoder side performs entropy encoding on the element based on the probability distribution of each element, to obtain an encoded bitstream.

A decoding procedure may include the following steps.

(1) After obtaining the bitstream, a decoder side determines the probability distribution of each element in $\hat{y}$ based on the entropy estimation network.
(2) The decoder side performs entropy decoding based on the bitstream and the probability distribution of each element, to obtain $\hat{y}$.
(4) The decoder side inputs $\hat{y}$ into a decoding network, to obtain a reconstructed image.

In the foregoing encoding and decoding procedures, entropy encoding and entropy decoding technologies are used. According to a principle of an information theory, an optimal data compression encoding method can be found. A theoretical limit of data compression is information entropy. If it is required that no information amount is lost in an encoding process, that is, the information entropy needs to be stored, such information retention encoding is referred to as entropy encoding. Entropy encoding is data compression encoding performed based on a distribution feature of a message occurrence probability.

Entropy encoding and entropy decoding are commonly used algorithms in data compression, and are used to compress data to a theoretical entropy size: $- \log_b P_s$, where b represents a number system (usually 2) for measuring a bitstream size, and $P_s$ represents a probability of a data element. For a sequence $S=\{P_s, s_1,..., s_n\}$ and a probability distribution $\{p_0, p_1,..., p_n\}$ corresponding to each element in the sequence, an objective of entropy encoding is to compress the sequence S to a binary bitstream of a size of $\Sigma - \log_2 p_i(s_i)$. An objective of entropy decoding is to restore the sequence S based on the probability distribution of each element and the bitstream.

An AI image compression technology has a high compression rate, so that researchers and scientific research institutes start to continuously apply the AI image compression technology to actual applications. However, in actual application, in addition to a high requirement on the compression rate, there is also a high requirement on decoding time and encoding time. In AI image compression, in addition to the encoding network/decoding network, entropy encoding and entropy decoding processes are also time-consuming steps. Therefore, entropy encoding and entropy decoding are one of the important bottlenecks in an AI image compression speed. How to optimize efficiency of entropy encoding and entropy decoding becomes an important research problem.

Entropy encoding and entropy decoding are time-consuming for the following reasons.

1. When a CPU performs entropy encoding and entropy decoding, the CPU can only perform serial operations because elements are associated with each other.

2. Each element may have a large value range. For example, a binary coder (binary coder) is usually used in a conventional compression technology, and a value of an element is 0 or 1. However, in the AI compression technology, a value range of an element is usually [-64, 64], [-128, 128], or the like. Because the value range is enlarged, probability distribution is more complex, and each element in the AI compression technology has its own probability distribution.

In addition, in entropy encoding and entropy decoding, a probability distribution value needs to be quantized, and is usually quantized to a power of bits, that is, round ($p_i * 2^{bit}$). In addition, a probability of each possible value in the range needs to be at least greater than 0. Therefore, if the range is large, for an element value with a low probability, there may be a large quantization error. For example, a probability $p_i = 0.0000001$ corresponding to an $i^{th}$ possible value of an element is quantized to 8 bits, and the probability changes to $1/2^8 = 0.03$. If a probability of a possible value is increased due to a quantization process, a probability of another possible value is reduced.

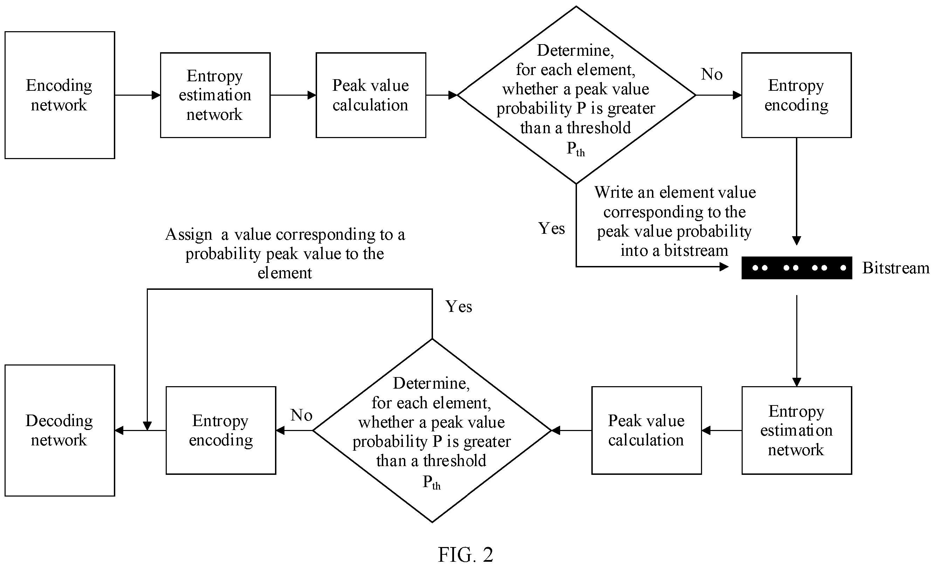

To optimize entropy encoding and entropy decoding processes, an entropy encoding optimization method based on probability distribution may be shown in FIG. 2. In this solution, it is considered that entropy encoding is not required for an element having a peak value probability distribution, and the element is directly replaced by using a peak value. For example, if a probability that probability distribution of an element is in an average value is greater than a preset threshold, an original value of the element is replaced by using the average value, and entropy encoding is not performed on the element. The method is trade-off between a bit rate and a loss. Elements that need to be entropy encoded and entropy decoded are reduced, and entropy encoding/decoding accelerates.

As shown in FIG. 2, an encoding procedure of the foregoing method may include the following steps.

(1) An encoder side inputs an image into an encoding network, and quantizes a feature map output by the encoding network, to obtain a quantized to-be-encoded feature map ŷ.

(2) The encoder side obtains probability distribution of each element in ŷ based on the entropy estimation network, and obtains an average value μ and a variance σ of each element by using Gaussian distribution as an example.

(3) The encoder side determines, based on the probability distribution, a probability peak value P of each element in a value range, that is, a probability corresponding to the average value μ in the Gaussian distribution.

(4) The encoder side traverses each element; determines whether the peak value probability P of each element is greater than a threshold $P_{th}$; if the peak value probability P of each element is greater than the threshold $P_{th}$, replaces an actual value of the element with an element value corresponding to the peak value probability P, and writes the element value into a bitstream; and if the peak value probability P of each element is less than the threshold $P_{th}$, perform entropy encoding on the element based on the probability distribution.

A decoding procedure may include the following steps.

(1) After obtaining the bitstream, a decoder side determines the probability distribution of each element in ŷ based on the entropy estimation network.

(2) The encoder side determines a probability peak value P of each element in a value range based on the probability distribution.

(3) The encoder side traverses each element; determines whether the peak value probability P of each element is greater than a threshold $P_{th}$; if the peak value probability P of each element is greater than the threshold $P_{th}$, assign a

value corresponding to the probability peak value P to the element; and if the peak value probability P of each element is less than the threshold $P_{th}$, perform entropy decoding on the element based on probability distribution.

(5) The decoder side inputs ŷ obtained after decoding into a decoding network, to obtain a reconstructed image.

The foregoing entropy encoding optimization method helps accelerate entropy encoding/decoding. However, in this method, for each element in the feature map, entropy encoding and entropy decoding are not performed, or an entire process of entropy encoding and entropy decoding is performed in a conventional manner. For an element on which entropy encoding and entropy decoding are performed, the entropy encoding process and the entropy decoding process are not optimized. For an element on which entropy encoding and entropy decoding are not performed, an element on which a value is assigned is directly written into the bitstream. This is not conducive to reducing a compression rate.

In another solution for optimizing entropy encoding and entropy decoding, a solution may be referred to as a bypass encoding (bypass) method. If a probability corresponding to a possible value of an element is small enough, entropy encoding is not performed on the element, and a value of the element is directly written into the bitstream.

An encoding procedure of the method may include the following steps.

(1) The encoder side determines probability distribution of each element in a feature map ŷ, and determines a value range in which each element is not less than a minimum probability threshold. For example, it is assumed that the probability threshold is 95%, a value range of an element is [-64, 64], and a probability that the value of the element is less than or equal to 40 is 95%. In this case, a value range of the element that is not less than the minimum probability threshold is -64 to 40.

(2) The encoder side traverses each element, and determines whether the value of the element is in the value range not less than the minimum probability threshold:

(2a) If the value of the element is outside the range, a flag bit is set for the element, to indicate that the element exceeds the value range that is not less than the minimum probability threshold, and the value of the element is directly written into the bitstream without being encoded.

(2b) If the value of the element is outside the range, entropy encoding is performed on the element based on the probability distribution.

A decoding procedure of the method may include the following steps.

(1) After obtaining the bitstream, a decoder side determines the probability distribution of each element in ŷ based on the entropy estimation network.

(2) The decoder side determines, based on information corresponding to each element in the bitstream, whether a flag bit is included. If the flag bit is included, the value of the element is directly read. If the flag bit is not included, entropy decoding is performed, based on the probability distribution of the element, on the information corresponding to the element.

When entropy encoding and entropy decoding are performed according to the foregoing method, an error of a value of a low probability element in a quantization process is reduced, but there is still a high requirement on quantization precision. In addition, in the method, there is also a problem that some elements are not encoded, and entropy encoding and entropy decoding are performed on some elements in a conventional manner.

Currently, an optimization method for entropy encoding and entropy decoding does not reduce complexity of an entropy encoding algorithm and an entropy decoding algorithm. Therefore, effect of optimizing an encoding speed and a decoding speed is limited.

In view of this, embodiments of this application provide an encoding and decoding method. A boundary value of an element is set, to narrow a target range of a value of the element, simplify probability distribution of the element in the target range, and further reduce a quantity of bits required for an element probability. In this way, complexity of an entropy encoding algorithm and an entropy decoding algorithm is reduced, thereby significantly reducing time consumed for entropy encoding and entropy decoding. This application may be applied to a process of encoding and compressing data such as an image or a video, for example, a data encoding and compression process in services such as video monitoring, live broadcast, terminal video recording, storage, and transmission, cloud encoding and decoding, cloud transcoding, and video stream distribution, and is particularly applicable to a compression scenario based on AI.

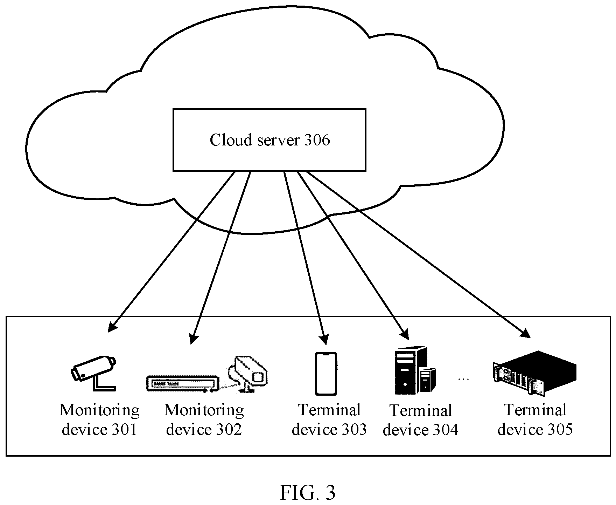

FIG. 3 is an example of a diagram of a scenario in which an encoding and decoding method according to an embodiment of this application can be applied. In this scenario, a monitoring device 301 (or a monitoring device 302) encodes collected video information, and uploads a bitstream obtained after encoding to a cloud server 306. After receiving a request for obtaining the bitstream from a terminal device 303 (or a terminal device 304 or a terminal device 305), the cloud server 306 may send the bitstream to the terminal device 303, and the terminal device 303 decodes the obtained bitstream, to play a video. In addition, the cloud server 306 may also have a decoding and/or encoding capability.

For example, the cloud server 306 may decode the obtained bitstream, process the video, and then encode the processed video, to subsequently send the processed video to another terminal device.

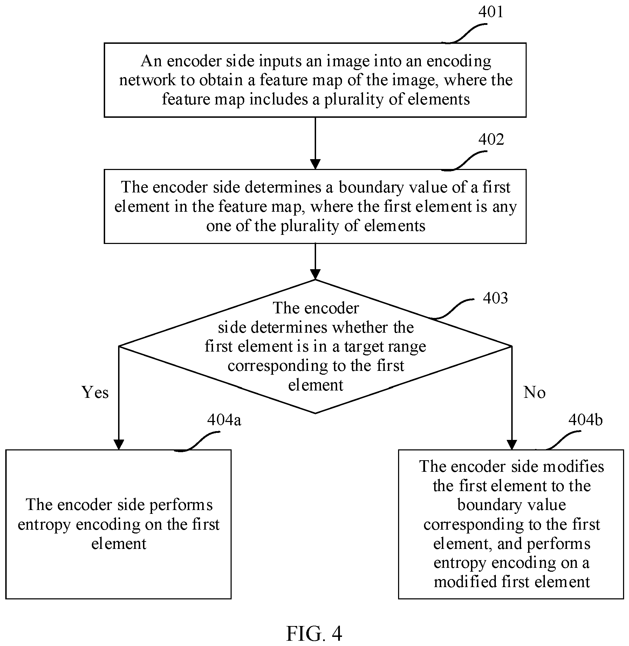

FIG. 4 is a schematic flowchart of an encoding method according to an embodiment of this application. A procedure shown in FIG. 4 is performed by an encoder side. The encoder side may be one computing device, or may be jointly implemented by a plurality of computing devices. The computing device is a device having an encoding function, and may be a server, for example, a cloud server, or may be a terminal device, for example, a monitoring device or a terminal device for live broadcast. Specifically, the encoding method shown in FIG. 4 may include the following steps.

Step 401: The encoder side inputs an image into an encoding network to obtain a feature map of the image, where the feature map includes a plurality of elements.

The encoder side inputs the obtained to-be-compressed image into the encoding network, and the encoding network is configured to convert the image into a feature representation of another space and output the feature map.

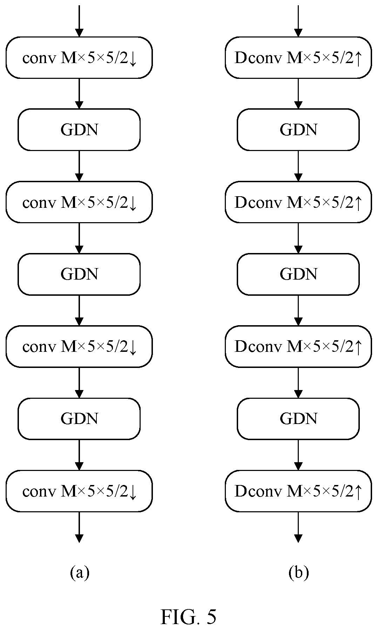

The encoding network may be understood as a functional module, and may include convolution, activation (such as relu and leaky_relu), upsampling, downsampling, and the like. FIG. 5 provides an example of an encoding and decoding network to which this embodiment of this application is applicable. As shown in (a) in FIG. 5, the encoding network on the encoder side may alternately include convolution (conv) and generalized divisor normalization (generalized divisive normalization, GDN). A convolution function conv M×5×5/2 shown in FIG. 5 represents a convolution function in which a quantity of channels is M, a convolution kernel is 5×5, and 1/2 downsampling is performed. GDN is one of activation functions. It should be understood that FIG. 5 is merely an example. In actual application, another encoding network that can implement a similar function may alternately be used.

The feature map output by the encoding network includes the plurality of elements. For example, when the input image is a three-dimensional matrix, the feature map output by the encoding network may also be a three-dimensional matrix. It is assumed that a size of the three-dimensional matrix is M×N×C, that is, the three-dimensional matrix includes M×N×C elements, a value of each element is a feature value corresponding to the element.

Step 402: The encoder side determines a boundary value of a first element in the feature map, where the first element is any one of the plurality of elements.

A common value range of an element includes [-64, 64], [-128, 128], and the like. Because the value range of the element is large, probability distribution of the element value is complex. Consequently, entropy encoding complexity is further increased, and an entropy encoding speed is low. To simplify entropy encoding complexity and improve an entropy encoding speed, in this embodiment of this application, an element-level boundary is further set based on an original value range, and a target range of the value the element during entropy encoding is determined based on the boundary, so that during subsequent entropy encoding, entropy encoding is performed based on the probability distribution in the target range. The boundary is applied to an element corresponding to the boundary, and is not applicable to each element in the feature map. In an optional case, each of the plurality of elements in the feature map corresponds to a respective boundary value. In another optional case, some of the plurality of elements correspond to respective boundary values, but not each element has a respective boundary value.

For example, an original value range of the element in the feature map is [-64, 64]. The value range is at a feature map level, that is, the original value range of each element in the feature map is [-64, 64]. However, for an element, a probability that a value of the element is in some intervals in [-64, 64] is small. If entropy encoding is still performed based on probability distribution of the value of the element in [-64, 64], an encoding process is complex and time-consuming. To simplify entropy encoding, an element-level boundary may be set, to remove an element value with a low probability value. Therefore, entropy encoding is subsequently performed based on value probability distribution in the target range determined based on the boundary. For example, an original value range of the first element is [-64, 64], but a probability that the value of the first element is greater than 40 is only 0.001, and a probability that the value of the first element is less than -40 is only 0.001. Because the probability that the value of the first element is greater than 40 or less than -40 is low, -40, and 40 may be set as the boundaries, and the target range is [-40, 40]. Subsequently, entropy encoding is performed on the first element based on probability distribution in the target range, to reduce entropy encoding complexity, and improve the entropy encoding speed.

The boundary value of the first element may include an upper boundary and/or a lower boundary. An example in which the original value range of the element in the feature map is [-64, 64] is still used. When the boundary of the first element includes an upper boundary r, the target range corresponding to the first element may be [-64, r], where $r \leq 64$. When the boundary of the first element includes a lower boundary $l$, the target range corresponding to the first element may be [$l$, 64], where $l \geq -64$. When the boundary of the first element includes the upper boundary r and the lower boundary $l$, the target range corresponding to the first element is [$l$, r], $l \geq -64$, and $r \leq 64$.

When determining the boundary value of the first element in the feature map, the encoder side may determine the boundary value of the first element based on the probability distribution of the first element, or may perform network training in advance, and output the boundary value of the first element through a trained network. The following provides specific descriptions.

1. The boundary value of the first element is determined based on the probability distribution of the first element.

The encoder side may first input the feature map output by the encoding network into an entropy estimation network. The entropy estimation network outputs a probability distribution model of the first element. The encoder side determines the boundary value of the first element based on the probability distribution model of the first element.

For example, the first element obeys Gaussian distribution. In this case, the probability distribution model of the first element may be represented by using an average value $\mu$ and a variance $\sigma$. In other words, the entropy estimation network may output the corresponding average value $\mu$ and the variance $\sigma$. The encoder side may determine the boundary value of the first element based on the variance. For example, if the average value $\mu$ is 0, the encoder side may determine $k\sigma$ as the upper boundary value, and/or determine $k\sigma$ as the lower boundary value, where $k$ is a constant, and $\sigma$ is the variance. In standard Gaussian distribution, a probability that the value is in a range of $[-\sigma, \sigma]$ is about 68%, a probability that the value is in a range of $[-2\sigma, 2\sigma]$ is about 95%, and a probability that a value is in a range of $[-3\sigma, 3\sigma]$ is about 99%. When the value of $k$ is larger, a probability that the value is in the target range is higher. It can be learned that a value with a low probability can be removed by setting the value of $k$.

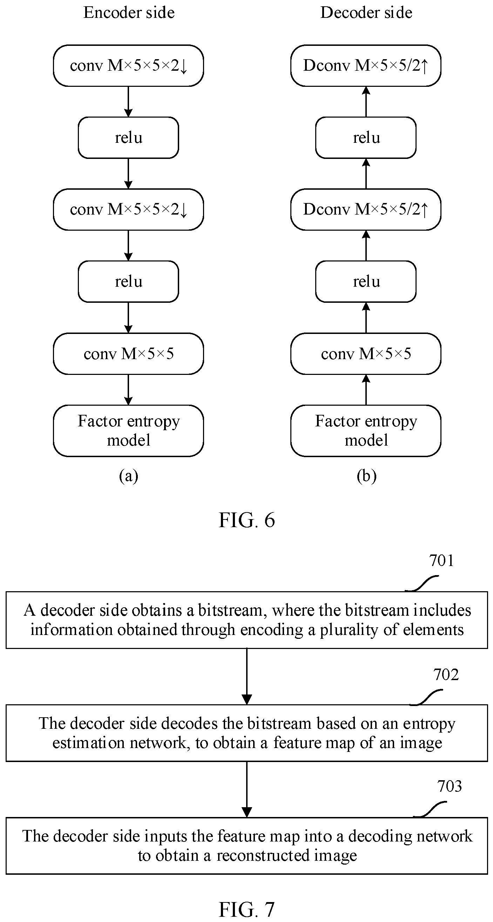

FIG. 6 provides an example of the entropy estimation network to which this embodiment of this application is applicable. As shown in (a) in FIG. 6, the entropy estimation network on the encoder side may alternately include convolution (conv) and activation (relu).

2. A network determines the boundary value of the first element.

The encoder side may input the feature map to the network for determining the boundary value, so that the network outputs the boundary value of the first element. For example, the boundary value may be trained for an entropy estimation network, so that the entropy estimation network can not only output a probability distribution model of the first element, but also output the boundary value of the first element.

Alternatively, the boundary value of the first element may not be output by the entropy estimation network, but is output by another network based on the feature map, or the boundary value of the first element is output by another network based on the probability distribution model of the first element.

The encoder side may traverse each element in the feature map in any one of the foregoing implementations, to determine the boundary value corresponding to each element.

Step 403: The encoder side determines whether the first element is in the target range corresponding to the first element.

The target range corresponding to the first element is the range determined based on the boundary value of the first element.

Optionally, before step 403 is performed, the first element may further be quantized. Correspondingly, if step 403 is performed, whether the quantized first element is in the target range corresponding to the first element is determined. For example, quantization may be rounding off the value of the first element, and a quantization formula may be $\hat{y} = round\,(y)$. $y$ represents a value of the first element before quantization, and $\hat{y}$ represents a value of the first element after quantization. For another example, residual quantization may also be performed on a value of the first element during quantization, and a quantization formula may be $\hat{y} = round(y - \mu) + \mu$. $y$ represents a value of the first element before quantization, $\mu$ represents an average value of probability distribution of the value of the first element, and $\hat{y}$ represents a value of the first element after quantization.

If the first element is in the target range corresponding to the first element, step 404a is performed. If the first element is outside the target range corresponding to the first element, step 404b is performed.

Step 404a: If the first element is in the target range corresponding to the first element, the encoder side performs entropy encoding on the first element.

If the first element is in the target range corresponding to the first element, it may be considered that the value of the first element is not a value with a low probability, and entropy encoding may be performed on the first element based on the probability distribution of the value of the first element in the target range. If the first element is quantized, entropy encoding is performed on the quantized first element.

For example, if the value probability of the quantized element $s_1$ is $p_G(s)$, and the value of the quantized element $s_1$ is in the target range $[l, r]$, entropy encoding is performed on the quantized element $s_1$ based on probability distribution of the value of the quantized element $s_1$ in the target range $[l, r]$. Specifically, a probability that the value of the element $s_1$ is less than the upper boundary $r$ of the target range is $c_G(r)$, and a probability that the value of the element $s_1$ is less than the lower boundary $l$ of the target range is $c_G(l)$. In this case, a probability that the value of the quantized element $s_1$ is in the

target range is $p_{LG}(s) = \dfrac{p_G(s)}{c_G(r) - c_G(l)}$ , and entropy encoding is performed on the quantized element $s_1$ based on the probability $p_{LG}(s)$.

The probability distribution of the value of the first element may be determined by the entropy estimation network.

To be specific, the encoder side inputs the feature map into the trained entropy estimation network, and the entropy estimation network outputs the probability distribution model of the first element. For example, the first element obeys Gaussian distribution (also referred to as normal distribution). In this case, the entropy estimation network may output the corresponding average value $\mu$ and the corresponding variance $\sigma$. The encoder side can determine, based on the average value $\mu$ and the variance $\sigma$, a probability corresponding to each possible value. For example, the original value range of the element in the feature map is [-64, 64]. The encoder side can determine, based on the average value $\mu$ and the variance $\sigma$ that correspond to the first element, the probability corresponding to any value in [-64, 64]. The encoder side determines a probability that an actual value of the first element (if the first element is quantized, the actual value herein is the quantized first element) and a probability that the actual value of the first element (if the first element is quantized, the actual value herein is the quantized first element) is in the target range. In this way, entropy encoding is performed on the first element based on the probability that the actual value of the first element is in the target range.

Step 404b: If the first element is outside the target range corresponding to the first element, the encoder side modifies the first element to the boundary value corresponding to the first element, and performs entropy encoding on the modified first element.

If the first element (or the quantized first element) is outside the target range corresponding to the first element, it may be considered that the value of the first element is a value with a low probability. In this case, the value of the first element may be modified to a corresponding boundary value, and an information loss is not obvious. However, complexity of performing entropy encoding on the first element can be reduced. In addition, because the probability of the value of the first element before the modification is small, when the probability is quantized, a large error is generated, and a probability of another value with a high probability is reduced. After the first element is modified to the boundary value, it is equivalent to combining probabilities of several values that exceed the boundary, and a quantization error generated when quantization is performed again is small. This reduces impact on a high probability value.

Specifically, if the first element is greater than the upper boundary of the target range, that is, the upper boundary included in the boundary value determined in step 402, the value of the first element is modified to the upper boundary value. If the first element is less than the lower boundary of the target range, that is, the lower boundary included in the boundary value determined in step 402, the value of the first element is modified to the lower boundary value. For example, the target range corresponding to the first element is [-40, 40]. If the value of the first element is 64, which is greater than the upper boundary of the target range, the value of the first element is modified to 40, and then entropy encoding is performed based on probability distribution of the value 40 in [-40, 40]. If the value of the first element is -50, which is less than the lower boundary of the target range, the value of the first element is modified to -40, and then entropy encoding is performed based on probability distribution of the value -40 in [-40, 40].

Similar to the manner of determining the probability distribution in step 404a, in step 404b, the encoder side may also determine, by using the entropy estimation network, the probability corresponding to each possible value of the first element. After the value of the first element is modified to a corresponding boundary value, a probability that the modified first element is in the target range is determined, and entropy encoding is further performed on the modified first element based on the probability that the modified first element is in the target range.

After step 404a or step 404b is performed on the first element, the obtained encoding information is included in a bitstream, and may be sent to a decoder side. The bitstream may include encoding information obtained after each element in the feature map is encoded.

In the foregoing method embodiment, the encoder side obtains the feature map of the image through the encoding network; determines a boundary value of each element in the feature map; determines, based on the boundary value of each element, a target range corresponding to each element; if a value of an element is in a target range corresponding to the element, performs entropy encoding on the element; and if the value of the element is outside the target range corresponding to the element, modify the value of the element to the boundary value corresponding to the element, and perform entropy encoding on the modified element. In the foregoing method, the boundary value corresponding to each element is determined. This helps narrow the target range corresponding to each element. Because the target range is narrowed, complexity of probability distribution of the element in the target range is reduced, so that entropy encoding complexity can be reduced, and an entropy encoding speed can be improved. For an element outside the target range, in an existing entropy encoding optimization manner, entropy encoding is not performed on the out-of-bounds element, but a value of the out-of-bounds element is directly written into the bitstream. This is equivalent to that special fixed-length code encoding is used, and a large quantity of bits need to be occupied. However, in the foregoing method embodiment of this application, after a value of the element that is outside the target range is modified, entropy encoding is still performed on the element, and information compression is performed when an information loss is not obvious. This improves compression performance, and helps avoid a quantization error generated when a low probability value is quantized.

Corresponding to the foregoing method, the decoder side may perform decoding based on the procedure shown in FIG. 6. The procedure shown in FIG. 6 is performed by the decoder side. The decoder side may be one computing device, or may be jointly implemented by a plurality of computing devices. Specifically, the decoding method shown in FIG.

7 may include the following steps.

Step 701: The decoder side obtains a bitstream, where the bitstream includes information obtained through encoding a plurality of elements.

Step 702: The decoder side decodes the bitstream based on an entropy estimation network, to obtain a feature map of an image.

FIG. 6 provides an example of an entropy estimation network applicable to embodiments of this application. As shown in (b) in FIG. 6, the entropy estimation network on the decoder side may alternately include deep convolution (dconv) and activation (relu).

Step 703: The decoder side inputs the feature map into a decoding network to obtain a reconstructed image.

For example, when the encoder side uses the encoding network shown in (a) in FIG. 5, the decoder side may use the decoding network shown in (b) in FIG. 5. The decoding network may alternately include deep convolution (dconv) and a GDN.

Encoding and decoding are performed based on the encoding and decoding processes shown in FIG. 4 and FIG. 7, and are better than existing entropy encoding and decoding methods in terms of encoding and decoding speeds and compression performance. The following compares the encoding and decoding methods provided in the foregoing embodiments of this application with the encoding and decoding method shown in FIG. 1 (baseline for short, or model 1 for short) and the encoding and decoding method shown in FIG. 2 (baseline+skip for short, or model 2 for short). During a comparison test, two types of data are collected based on the encoding and decoding methods in embodiments of this application: 1. Upper and lower boundary values are respectively -5$\sigma$ and 5$\sigma$ (which are referred to as limitG5 for short, or referred to as a model 3 for short); 2. Upper and lower boundary values are respectively -10$\sigma$ and 10$\sigma$ (limitG10 for short).

A Bjontegaard-Delta bit rate (BD-Rate) is used to measure performance between different compression methods. BD-Rate of a method A compared with method B indicates a difference between a bit rate of the method A and a bit rate of a method B under a same objective indicator, and is usually represented by a percentage. If the BD-Rate is -x%, the percentage indicates that method A can save x% space compared with the method B. If the BD-Rate is positive, the percentage indicates that x% space is added.

**Table 1**

|  | Baseline | Baseline+Skip | LimitG10 | LimitG5 |
|---|---|---|---|---|
| BD-Rate | 0.0% | -4.17% | -4.91% | -4.95% |

As shown in Table 1, baseline is used as a comparison benchmark, and baseline+skip, limitG5, and limitG10 are respectively compared with the baseline. A BD-Rate of baseline+skip is -4.17%, indicating that baseline+skip saves 4.17% space compared with the baseline. A BD-Rate of limitG10 is -4.91%, indicating that limitG10 saves 4.91% space compared with the baseline. A BD-Rate of limitG5 is -4.95%, indicating that limitG5 saves 4.95% space compared with the baseline. It can be learned that the encoding method provided in embodiments of this application has better compression performance than the encoding methods shown in FIG. 1 and FIG. 2.

When encoding speeds of the foregoing plurality of encoding methods are compared, methods baseline, baseline+skip, bypass (two groups of data whose probability thresholds are respectively 5 $\sigma$ and 10 $\sigma$ are respectively referred to as baseline+bypass5 (or model 4 for short) and baseline+bypass10 (or model 5 for short) for short), and limitG5 are compared. In each method, 8 bits, 10 bits, 12 bits, and 14 bits are used to quantize a probability.

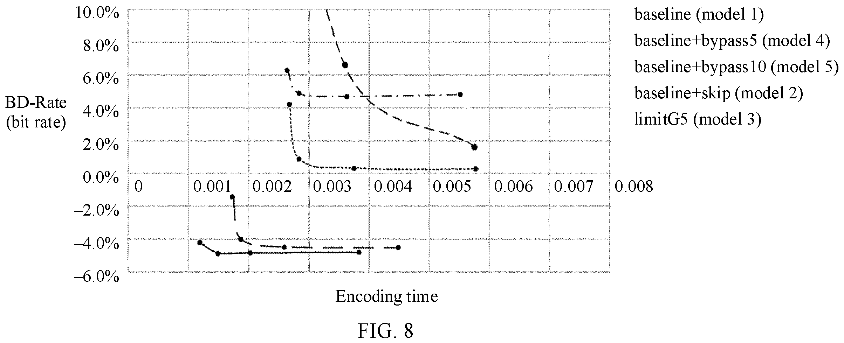

As shown in FIG. 8, a horizontal coordinate represents encoding time, a vertical coordinate represents a BD-Rate, and five curves sequentially correspond to baseline, baseline+bypass5, baseline+bypass10, baseline+skip, and limitG5 from top to bottom. It can be seen from FIG. 8 that, when the probability is quantized by using 8 bits (that is, first points on each curve, and a first point on a baseline curve is not shown because a BD-Rate is excessively high), encoding time of limitG5 is the shortest and a BD-Rate is the lowest. When the probability is quantized by using 10 bits (that is, second points on each curve, and a second point on the baseline curve are not displayed because the BD-Rate is excessively high), the encoding time of limitG5 is the shortest and the BD-Rate is the lowest. When the probability is quantized by using 12 bits and 14 bits, the encoding time of limitG5 is the shortest and the BD-Rate is the lowest. It can be learned that the encoding and decoding method provided in embodiments of this application are better than the encoding and decoding methods shown in FIG. 1 and FIG. 2 and the bypass method in terms of an encoding speed.

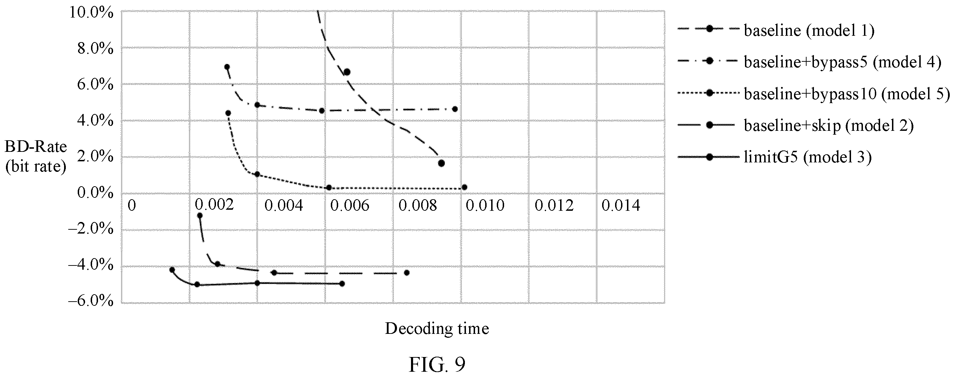

As shown in FIG. 9, a horizontal coordinate represents decoding time, and a vertical coordinate represents a BD-Rate. It can be learned from FIG. 9 that, when the probability is quantized by using 8 bits, 10 bits, 12 bits, and 14 bits, limitG5 has shortest decoding time and a lowest BD-Rate. Therefore, the encoding and decoding method provided in embodiments of this application are better than the encoding and decoding method shown in FIG. 1 and FIG. 2 and the bypass method in terms of a decoding speed.

Embodiments of this application further provide an encoding method and a decoding method, to reduce complexity of an entropy encoding algorithm and an entropy decoding algorithm, thereby significantly reducing time consumed for entropy encoding and entropy decoding. The method may also be applied to a process of encoding and compressing data such as an image or a video, for example, a data encoding and compression process in services such as video monitoring, live broadcast, terminal recording, storage, and transmission, and is particularly applicable to a compression scenario based on AI.

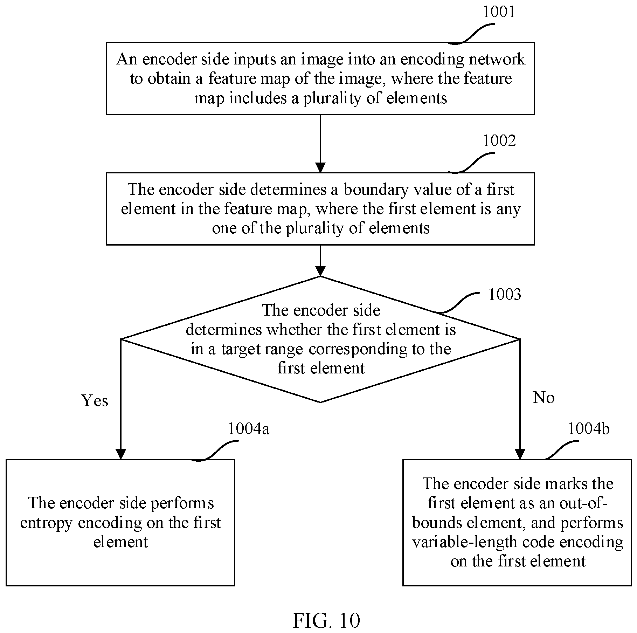

FIG. 10 is a schematic flowchart of another encoding method according to an embodiment of this application. A procedure shown in FIG. 10 is performed by an encoder side. The encoder side may be one computing device, or may be jointly implemented by a plurality of computing devices. Specifically, the encoding method shown in FIG. 10 may include the following steps.

Step 1001: The encoder side inputs an image into an encoding network to obtain a feature map of the image, where the feature map includes a plurality of elements.

This step is similar to step 401 in the foregoing embodiments, and the encoding network shown in FIG. 5 (a) may also be used to obtain the feature map of the image. Certainly, FIG. 5 is merely an example, and another encoding network that can implement a similar function may alternatively be used.

Step 1002: The encoder side determines a boundary value of a first element in the feature map, where the first element is any one of the plurality of elements.

The determined boundary value of the first element may include an upper boundary value, or include a lower boundary value, or may include an upper boundary value and a lower boundary value.

The encoder side may determine the boundary value of the first element based on probability distribution of the first element, or a network may determine the boundary value of the first element. For a specific implementation, refer to the specific implementation of step 402 in the foregoing embodiments. Details are not described herein again.

The encoder side may traverse each element in the feature map, to determine the boundary value corresponding to each element.

Step 1003: The encoder side determines whether the first element is in the target range corresponding to the first element.

After determining the boundary value of the first element, the encoder side may determine, based on the boundary value, the target range corresponding to the first element. For example, an original value range of the first element is [-64, 64]. When the boundary of the first element includes an upper boundary r, the target range corresponding to the first element may be [-64, r], where $r \leq 64$. When the boundary of the first element includes a lower boundary 1, the target range corresponding to the first element may be [1, 64], where $1 \geq -64$. When the boundary of the first element includes the upper boundary r and the lower boundary 1, the target range corresponding to the first element is [l, r], $l \geq -64$, and $r \leq 64$.

If the first element is in the target range corresponding to the first element, step 1004a is performed. If the first element is outside the target range corresponding to the first element, step 1004b is performed.

Step 1004a: If the first element is in the target range corresponding to the first element, the encoder side performs entropy encoding on the first element.

If the first element is in the target range corresponding to the first element, it may be considered that the value of the first element is not a value with a low probability, and entropy encoding may be performed on the first element based on the probability distribution of the value of the first element in the target range. If the first element is quantized, entropy encoding is performed on the quantized first element. For details, refer to any implementation of step 404a in the foregoing embodiment.

Step 1004b: If the first element is outside the target range corresponding to the first element, the encoder side marks the first element as an out-of-bounds element, and performs variable-length code encoding on the first element.

If the first element is outside the target range corresponding to the first element, it may be considered that a value of the first element is a value with a low probability. In this case, entropy encoding may not be performed on the first element, but the first element is encoded in a variable-length code encoding manner. For example, the first element may be encoded by using a variable-length code encoding method such as Golomb code, Golomb Rice code, and exponential-Golomb code.

When marking the first element as the out-of-bounds element, the encoder side needs to encode, into the bitstream, flag information indicating that the first element is the out-of-bounds element, so that the decoder side can determine, based on the out-of-bounds flag information, that the first element may be the out-of-bounds element. For example, the encoder side may set an out-of-bounds bit for the out-of-bounds element, to indicate that the element is the out-of-bounds element. If the decoder side parses out the out-of-bounds bit from the bitstream, the decoder side may determine that the element is the out-of-bounds element. Alternatively, the encoder side may set a flag bit for each element, and use "0" and "1" to respectively indicate that the element does not exceed the boundary or exceeds the boundary. For another example, the encoder side may modify the value of the first element to a preset out-of-bounds value, and perform entropy encoding or another encoding manner on the first element, so that the decoder side determines the element as the out-of-bounds value after obtaining the preset out-of-bounds value through decoding. It is assumed that the target range corresponding to the first element is [-10, 10]. If the value of the first element is greater than 10, the value is modified to 11, indicating that the first element is greater than the upper boundary. If the value of the first element is less than -10, the value is modified to -11, indicating that the first element is less than the lower boundary.

The bitstream includes encoding information obtained by performing entropy encoding on the first element, or encoding information obtained by performing variable-length code encoding on the first element. In addition, the bitstream may further include bitstream information obtained by performing entropy encoding on another non-out-of-bounds element, and encoding information obtained by performing variable-length code encoding on the another out-of-bounds element.

If the first element is quantized, when 1004b is performed, when the quantized first element is outside the target range, the encoder side performs variable-length code encoding on the quantized first element.

In the encoding method shown in FIG. 2, for the element marked as the out-of-bounds element, a value of the element is directly written into the bitstream. This is equivalent to that special fixed-length code encoding is used, and a large quantity of bits need to be occupied However, in step 1004b in this embodiment of this application, variable-length code encoding is performed on the out-of-bounds element, so that more feature information of the out-of-bounds element can be retained, and information about the out-of-bounds element can be encoded and compressed. In a scenario in which a probability distribution curve is a single peak (for example, the Gaussian distribution model mentioned in embodiments of this application), in comparison with conventional fixed-length code encoding, variable-length code encoding has higher compression performance, and information occupies fewer bits after encoding.

In a possible implementation, to further improve compression performance, when performing variable-length code encoding on the out-of-bounds first element, the encoder side may encode a difference between the first element and the boundary. For example, if the first element is greater than the upper boundary in the boundary, a first difference between the first element and the upper boundary value may be determined, and then variable-length code encoding is performed on the first difference. If the first element is less than the lower boundary in the boundary, a second difference between the first element and the lower boundary may be determined, and then variable-length code encoding is performed on the second difference. The difference is usually far less than the value of the first element, and may be represented by using fewer bits. Therefore, variable-length code encoding is performed on the difference between the first element and the boundary, so that compression performance can further be improved.

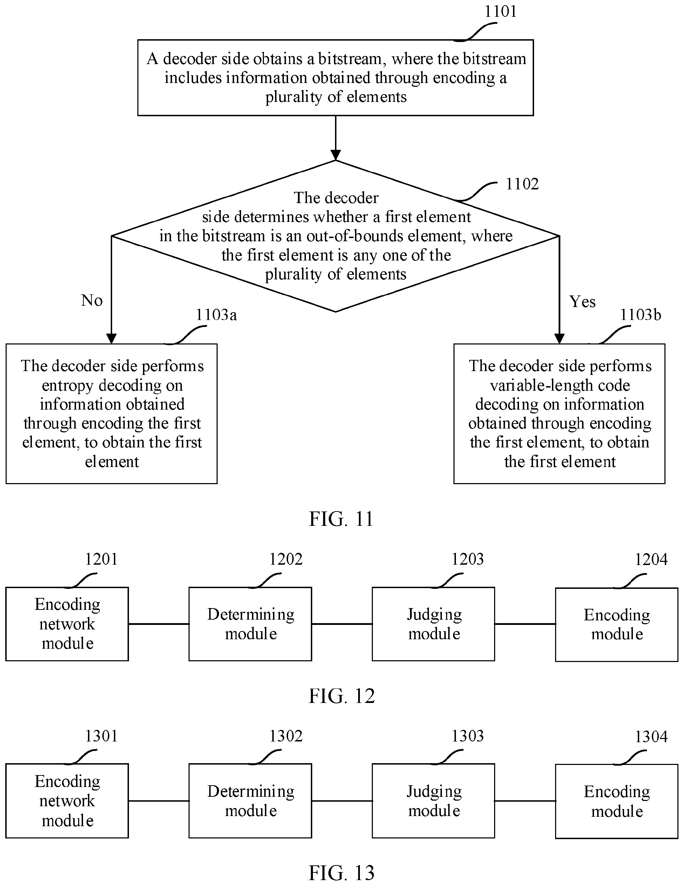

Corresponding to the method shown in FIG. 10, the decoder side may perform decoding based on the procedure shown in FIG. 11. The procedure shown in FIG. 11 is performed by the decoder side. The decoder side may be one computing device, or may be jointly implemented by a plurality of computing devices. Specifically, the decoding method shown in FIG. 11 may include the following steps.

Step 1101: The decoder side obtains a bitstream, where the bitstream includes information obtained through encoding a plurality of elements.

Step 1102: The decoder side determines whether a first element in the bitstream is an out-of-bounds element, where the first element is any one of the plurality of elements.

The decoder side determines whether the first element is the out-of-bounds element, that is, determines whether the first element is in the target range corresponding to the first element. If the first element is in the target range, the first element is not the out-of-bounds element. If the first element is outside the target range, the first element is the out-of-bounds element.

Because the encoder side marks the out-of-bounds element during encoding, the bitstream includes information indicates that the first element is the out-of-bounds element. Correspondingly, when performing decoding, the decoder side can also determine, based on the out-of-bounds flag information, whether the first element exceeds the boundary. For example, the encoder side may set an out-of-bounds bit for the out-of-bounds element, to indicate that the element is the out-of-bounds element. If the decoder side parses out the out-of-bounds bit from the bitstream, the decoder side may determine that the element is the out-of-bounds element. Alternatively, the encoder side may set a flag bit for each element, and use "0" and "1" to respectively indicate that the element does not exceed the boundary or exceeds the boundary or not. The decoder side determines, based on the flag bit of each element, whether the element exceeds the boundary. For another example, if the encoder side modifies a value of the out-of-bounds first element to a preset out-of-bounds value, the decoder side first determines the boundary value of the first element during decoding, and if finding that a decoded value of the first element exceeds the boundary, determines that the first element is the out-of-bounds element. It is assumed that an upper boundary value and a lower boundary value corresponding to the first element are respectively 10 and -10. If a value of the decoded first element is 11, it indicates that the first element is greater than the upper boundary. If the value of the decoded first element is -11, it indicates that the first element is less than the lower boundary.

If the decoder side determines that the first element does not exceed the boundary, step 1103a is performed; or if the decoder side determines that the first element exceeds the boundary, step 1103b is performed.

Step 1103a: If the first element is not the out-of-bounds element, the decoder side performs entropy decoding on information obtained through encoding the first element, to obtain the first element.

For a non-out-of-bounds element, the decoder side performs entropy decoding on the encoding information. For example, the decoder side may perform entropy decoding on the encoding information based on the entropy estimation network, to obtain the value of the first element. If the encoder side performs encoding by using the entropy estimation network shown in (a) in FIG. 6, the decoder side may perform decoding by using the entropy estimation network shown in (b) in FIG. 6.

Step 1103b: If the first element is the out-of-bounds element, the decoder side performs variable-length code decoding on information obtained through encoding the first element, to obtain the first element.

When encoding the out-of-bounds element, the encoder side performs variable-length code encoding on a difference between the first element and the boundary value. In this case, when performing decoding, the decoder side may first determine the boundary value of the first element, perform variable-length code decoding on the information obtained through encoding the first element to obtain the difference, and then determine the value of the first element based on the boundary value of the first element and the difference obtained through decoding. For example, the boundary of the first element includes an upper boundary and a lower boundary. If the difference obtained through decoding is positive, it may be considered that the difference is a difference obtained by subtracting the upper boundary from the first element. If the difference obtained through decoding is negative, it may be considered that the difference is a difference obtained by subtracting the lower boundary from the first element of the difference.

When determining the boundary of the first element, the decoder side, similar to the encoder side, may input the bitstream into the entropy estimation network to obtain the probability distribution of the first element, and then the decoder side determines the boundary value of the first element based on the probability distribution of the first element. Alternatively, the decoder side may obtain the first boundary value based on a trained network. For example, the decoder side may input the bitstream to the entropy estimation network, and the entropy estimation network outputs the boundary value of the first element. Generally, the encoder side obtains the boundary value of the first element, and the decoder side may correspondingly obtain the boundary value of the first element by performing an inverse operation based on the bitstream.

Further, after performing step 1103a or step 1103b for each element, the decoder side may obtain the feature map of the image, and then the decoder side may input the feature map to the encoding network to obtain a reconstructed image. If the encoder side uses the encoding network shown in FIG. 5 (a), the decoder side may use the decoding network shown in FIG. 5 (b).

In the foregoing method embodiment, an encoder side obtains the feature map of the image through the encoding network; determines a boundary value of each element in the feature map; determines, based on the boundary value of each element, a target range corresponding to each element; if a value of an element is in a target range corresponding to the element, performs entropy encoding on the element; and if the value of the element is outside the target range corresponding to the element, marking the first element as the out-of-bounds element, and performing variable-length code encoding on the first element. Correspondingly, when determining, based on the obtained bitstream, that the first element is not the out-of-bounds element, the decoder side may perform entropy decoding on the information obtained through encoding the first element. When determining that the first element is the out-of-bounds element, the decoder side performs variable-length code decoding on the information obtained through encoding the first element. In the foregoing method, the boundary value corresponding to each element is determined, to help narrow the target range corresponding to each element. Because the target range is narrowed down, complexity of probability distribution of the element in the target range is reduced, so that complexity of entropy encoding can be reduced, and an entropy encoding speed can be improved. For the out-of-bounds element, in an existing entropy encoding optimization manner, a fixed-length code encoding is used, and a large quantity of bits need to be occupied. However, in the foregoing embodiment of this application, variable-length code encoding is performed on the out-of-bounds element, to help improve compression performance. In particular, variable-length code encoding is performed on a difference between the out-of-bounds element and a boundary, to further help reduce a quantity of bits required after encoding, and further improve compression performance.

Based on a same technical idea, embodiments of this application further provide an encoding apparatus. The encoding apparatus is configured to implement a function of the encoder side in the foregoing method embodiments. The apparatus may include modules/units that perform any possible implementation in the foregoing method embodiments. These modules/units may be implemented by hardware, or may be implemented by hardware executing corresponding software.

For example, as shown in FIG. 12, the apparatus may include an encoding network module 1201, a determining module 1202, a judging module 1203, and an encoding module 1204.

Specifically, the encoding network module 1201 is configured to input an image into an encoding network to obtain a feature map of the image, where the feature map includes a plurality of elements.

The determining module 1202 is configured to determine a boundary value of a first element in the feature map, where the first element is any one of the plurality of elements.

The judging module 1203 is configured to judge whether the first element is in a target range corresponding to the first element, where the target range is determined based on the boundary value of the first element.

The encoding module 1204 is configured to: when the first element is in the target range corresponding to the first element, perform entropy encoding on the first element; and when the first element is outside the target range corresponding to the first element, modify the first element to the boundary value corresponding to the first element, and perform entropy encoding on the modified first element.

In a possible implementation, the boundary value includes an upper boundary value and/or a lower boundary value; and when modifying the first element to the boundary value corresponding to the first element, the encoding module 1204 is specifically configured to: if the first element is greater than the upper boundary value, modify the first element to the upper boundary value; or if the first element is less than the lower boundary value, modify the first element to the lower boundary value.

In a possible implementation, when determining the boundary value of the first element in the feature map, the determining module 1202 is specifically configured to: input the feature map into an entropy estimation network, where the entropy estimation network outputs a probability distribution model of the first element in the feature map; and determine the boundary value of the first element based on the probability distribution model of the first element.

In a possible implementation, when determining the boundary value of the first element based on the probability distribution model of the first element, the determining module 1202 is specifically configured to determine the boundary value of the first element based on a variance of the probability distribution model of the first element.

In a possible implementation, the boundary value includes the upper boundary value and/or the lower boundary value; the upper boundary value in the boundary value is $k \times \sigma$, and/or the lower boundary value in the boundary value is $-k \times \sigma$; and $k$ is a constant, and $\sigma$ represents the variance of the probability distribution model.

In a possible implementation, when determining the boundary value of the first element in the feature map, the determining module 1202 is specifically configured to input the feature map into an entropy estimation network, where the entropy estimation network outputs a probability distribution model of the first element and the boundary value of the first element.

Based on a same technical idea, embodiments of this application further provide an encoding apparatus. The encoding apparatus is configured to implement a function of the encoder side in the foregoing method embodiments. The apparatus may include modules/units that perform any possible implementation in the foregoing method embodiments. These modules/units may be implemented by hardware, or may be implemented by hardware executing corresponding software.

For example, as shown in FIG. 13, the apparatus may include an encoding network module 1301, a determining module 1302, a judging module 1303, and an encoding module 1304.

Specifically, the encoding network module 1301 is configured to input an image into an encoding network to obtain a feature map of the image, where the feature map includes a plurality of elements.

The determining module 1302 is configured to determine a boundary value of a first element in the feature map, where the first element is any one of the plurality of elements.

The judging module 1303 is configured to judge whether the first element is in a target range corresponding to the first element, where the target range is determined based on the boundary value of the first element.

The encoding module 1304 is configured to: when the first element is in the target range corresponding to the first element, perform entropy encoding on the first element; or when the first element is outside the target range corresponding to the first element, mark the first element as an out-of-bounds element, and perform variable-length code encoding on the first element.

In a possible implementation, when marking the first element as the out-of-bounds element, the encoding module 1304 is specifically configured to encode, into a bitstream, flag information indicating that the first element is the out-of-bounds element.

In a possible implementation, the boundary value includes an upper boundary value and/or a lower boundary value; and when performing variable-length code encoding on the first element, the encoding module 1304 is specifically configured to: if the first element is greater than the upper boundary value, determine a first difference between the first element and the upper boundary value, and perform variable-length code encoding on the first difference; or if the first element is less than the lower boundary value, determine a second difference between the first element and the lower boundary value, and perform variable-length code encoding on the second difference.

In a possible implementation, when determining the boundary value of the first element in the feature map, the determining module 1302 is specifically configured to: input the feature map into an entropy estimation network, where the entropy estimation network outputs a probability distribution model of the first element in the feature map; and determine the boundary value of the first element based on the probability distribution model of the first element.

In a possible implementation, when determining the boundary value of the first element based on the probability distribution model of the first element, the determining module 1302 is specifically configured to determine the boundary value of the first element based on a variance of the probability distribution model of the first element.

In a possible implementation, the boundary value includes the upper boundary value and/or the lower boundary value; the upper boundary value in the boundary value is $k \times \sigma$, and/or the lower boundary value in the boundary value is

$-k×\sigma;$ and $k$ is a constant, and $\sigma$ represents the variance of the probability distribution model.

In a possible implementation, when determining the boundary value of the first element in the feature map, the determining module 1302 is specifically configured to input the feature map into an entropy estimation network, where the entropy estimation network outputs a probability distribution model of the first element and the boundary value of the first element.

Based on a same technical idea, embodiments of this application further provide a decoding apparatus. The decoding apparatus is configured to implement a function of the decoder side in the foregoing method embodiments. The apparatus may include modules/units that perform any possible implementation in the foregoing method embodiments. These modules/units may be implemented by hardware, or may be implemented by hardware executing corresponding software.

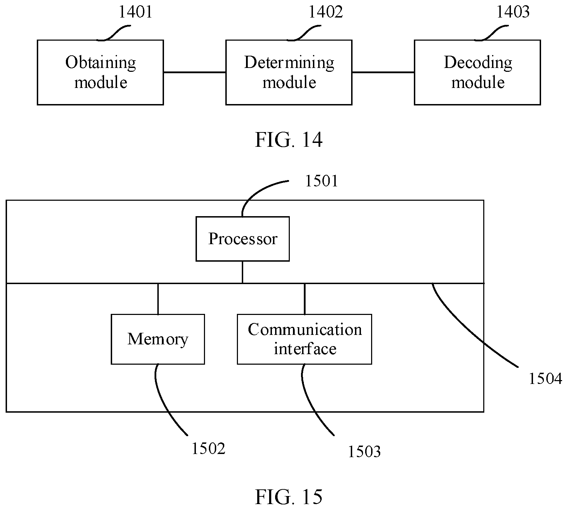

For example, as shown in FIG. 14, the apparatus may include an obtaining module 1401, a determining module 1402, and a decoding module 1403.

Specifically, the obtaining module 1401 is configured to obtain a bitstream, where the bitstream includes information obtained through encoding a plurality of elements.

The determining module 1402 is configured to determine whether a first element in the bitstream is an out-of-bounds element, where the first element is any one of the plurality of elements.

The decoding module 1403 is configured to: when the first element is the out-of-bounds element, perform variable-length code decoding on information obtained through encoding the first element, to obtain the first element; or when the first element is not the out-of-bounds element, perform entropy decoding on information obtained through encoding the first element, to obtain the first element.

In a possible implementation, when determining whether the first element in the bitstream is the out-of-bounds element, the determining module 1402 is specifically configured to: if the bitstream includes information indicates that the first element is the out-of-bounds element, determine that the first element is the out-of-bounds element.

In a possible implementation, when performing variable-length code decoding on the information obtained through encoding the first element, to obtain the first element, the decoding module 1403 is specifically configured to: determine a boundary value of the first element; perform variable-length code decoding on the information obtained through encoding the first element, to obtain a difference, where the difference is a difference between the first element and an upper boundary value in the boundary value, or is a difference between the first element and a lower boundary value in the boundary value; and determine the first element based on the boundary value and the difference.

In a possible implementation, when determining the boundary value of the first element, the decoding module 1403 is specifically configured to: determine a probability distribution model of the first element; and determine the boundary value of the first element based on the probability distribution model of the first element.

In a possible implementation, when determining the boundary value of the first element based on the probability distribution model of the first element, the decoding module 1403 is specifically configured to determine the boundary value of the first element based on a variance of the probability distribution model of the first element.

In a possible implementation, the boundary value includes the upper boundary value and/or the lower boundary value; the upper boundary value in the boundary value is $k×\sigma,$ and/or the lower boundary value in the boundary value is $-k×\sigma;$ and $k$ is a constant, and $\sigma$ represents the variance of the probability distribution model.

In a possible implementation, when determining the boundary value of the first element, the decoding module 1403 is specifically configured to input the bitstream to an entropy estimation network, where the entropy estimation network outputs the boundary value of the first element.

Embodiments of this application further provide a computer device. The computer device includes a processor 1501 shown in FIG. 15 and a memory 1502 connected to the processor 1501. Further, the computer device may further include a communication interface 1503 and a communication bus 1504.

The processor 1501 may be a general-purpose processor, a microprocessor, an application-specific integrated circuit (application-specific integrated circuit, ASIC), a field programmable gate array (field programmable gate array, FPGA) or another programmable logic device, a discrete gate or a transistor logic device, or one or more integrated circuits configured to control program execution of the solutions in this application. The general purpose processor may be a microprocessor or any conventional processor or the like. The steps of the method disclosed with reference to embodiments of this application may be directly performed by a hardware processor, or may be performed by using a combination of hardware in the processor and a software module.

The memory 1502 is configured to store program instructions and/or data, so that the processor 1501 invokes the instructions and/or data stored in the memory 1502, to implement the foregoing functions of the processor 1501. The memory 1502 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM) or any other medium that can be used to carry or store expected program code in a form of instructions or a data structure and that can be accessed by a computer, but is not limited thereto. The memory 1502 may exist independently, for example, an off-chip memory, and is connected to the processor 1501 through the communication bus 1504. Alternatively, the memory 1502 may be integrated with the processor 1501. The memory 1502 may include an internal memory and an external memory (for example, a hard disk).

The communication interface 1503 is configured to communicate with another device, for example, a PCI bus interface, a network interface card, a radio access network (radio access network, RAN), or a wireless local area network (wireless local area networks, WLAN).

The communication bus 1504 may include a path for transferring information between the foregoing components.

For example, the computer device may be the encoder side in FIG. 4 or FIG. 10, or may be the decoder side shown in FIG. 11.

When the computer device is the encoder side, the processor 1501 may invoke the instructions in the memory 1502 to perform the following steps:

inputting an image into an encoding network to obtain a feature map of the image, where the feature map includes a plurality of elements; determining a boundary value of a first element in the feature map, where the first element is any one of the plurality of elements; judging whether the first element is in a target range corresponding to the first element, where the target range is determined based on the boundary value of the first element; and if the first element is in the target range corresponding to the first element, performing entropy encoding on the first element; or if the first element is outside the target range corresponding to the first element, modifying the first element to the boundary value corresponding to the first element, and performing entropy encoding on the modified first element; or marking the first element as an out-of-bounds element, and performing variable-length code encoding on the first element.

In addition, the foregoing components may further be configured to support another process performed by the encoder side in the embodiments shown in FIG. 4 or FIG. 10. For beneficial effects, refer to the foregoing descriptions. Details are not described herein again.

When the computer device is a decoder side, the processor 1501 may invoke the instructions in the memory 1502 to perform the following steps:

obtaining a bitstream, where the bitstream includes information obtained through encoding a plurality of elements; determining whether a first element in the bitstream is an out-of-bounds element, where the first element is any one of the plurality of elements; and if the first element is the out-of-bounds element, performing variable-length code decoding on information obtained through encoding the first element, to obtain the first element; or if the first element is not the out-of-bounds element, performing entropy decoding on the information obtained through encoding the first element, to obtain the first element.

In addition, the foregoing components may further be configured to support another process performed by the decoder side in the embodiments shown in FIG. 11. For beneficial effect, refer to the foregoing descriptions. Details are not described herein again.

Based on a same technical idea, an embodiment of this application further provides a computer-readable storage medium. The computer-readable storage medium stores computer-readable instructions. When the computer-readable instructions are run on a computer, the foregoing method embodiments are performed.

Based on a same technical idea, an embodiment of this application further provides a computer program product including instructions. When the computer program product runs on a computer, any one of the foregoing method embodiments is performed.

Based on a same technical idea, an embodiment of this application further provides a computer-readable storage medium. The computer-readable storage medium stores a bitstream. The bitstream is generated according to the encoding method shown in FIG. 4 or FIG. 10.

Based on a same technical idea, an embodiment of this application further provides a computer-readable storage medium. The computer-readable storage medium stores a bitstream. The bitstream includes program instructions executable by a decode. The program instructions enable the decoder to perform the decoding method according to any one of the third aspect and the possible implementations of the third aspect.

Based on a same technical idea, an embodiment of this application further provides a decoding system. The decoding system includes at least one memory and a decoder. The at least one memory is configured to store a bitstream. The decoder is configured to perform the decoding method shown in FIG. 11.

Based on a same technical idea, an embodiment of this application further provides a bitstream storage method. The method includes: receiving or generating a bitstream, and storing the bitstream in a storage medium

In a possible implementation, the method further includes: performing format conversion processing on the bitstream to obtain a format-converted bitstream, and storing the format-converted bitstream in the storage medium.

Based on a same technical idea, an embodiment of this application further provides a bitstream transmission method. The method includes: receiving or generating a bitstream, and transmitting the bitstream to a cloud server, or transmitting the bitstream to a mobile terminal.

It should be noted that, in descriptions of this application, terms such as "first" and "second" are only used for distinguishing the descriptions, and cannot be understood as an indicating or implying relative importance or indicating or implying a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Persons skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application are described, persons skilled in the art can make changes and modifications to these embodiments after they learn of a basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this case, this application is intended to cover these modifications and variations of the embodiments of this application provided that they fall within the scope of protection defined by the following claims and their equivalent technologies.

**Claims**

1. An encoding method, wherein the method comprises:

   inputting an image into an encoding network to obtain a feature map of the image, wherein the feature map comprises a plurality of elements;
   determining a boundary value of a first element in the feature map, wherein the first element is any one of the plurality of elements;
   judging whether the first element is in a target range corresponding to the first element, wherein the target range is determined based on the boundary value of the first element; and
   if the first element is in the target range corresponding to the first element, performing entropy encoding on the first element; or
   if the first element is outside the target range corresponding to the first element, marking the first element as an out-of-bounds element, and performing variable-length code encoding on the first element.

2. The method according to claim 1, wherein the marking the first element as an out-of-bounds element comprises: encoding, into a bitstream, flag information indicating that the first element is the out-of-bounds element.

3. The method according to claim 1 or 2, wherein the boundary value comprises an upper boundary value and/or a lower boundary value; and
the performing variable-length code encoding on the first element comprises:

if the first element is greater than the upper boundary value, determining a first difference between the first element and the upper boundary value, and performing variable-length code encoding on the first difference; or
if the first element is less than the lower boundary value, determining a second difference between the first element and the lower boundary value, and performing variable-length code encoding on the second difference.

4. The method according to any one of claims 1 to 3, wherein the determining a boundary value of a first element in the feature map comprises:

inputting the feature map into an entropy estimation network, wherein the entropy estimation network outputs a probability distribution model of the first element in the feature map; and
determining the boundary value of the first element based on the probability distribution model of the first element.

5. The method according to claim 4, wherein the determining the boundary value of the first element based on the probability distribution model of the first element comprises:
determining the boundary value of the first element based on a variance of the probability distribution model of the first element.

6. The method according to claim 5, wherein the boundary value comprises the upper boundary value and/or the lower boundary value;

the upper boundary value in the boundary value is $k\times\sigma$, and/or the lower boundary value in the boundary value is $-k\times\sigma$; and
$k$ is a constant, and $\sigma$ represents the variance of the probability distribution model.

7. The method according to any one of claims 1 to 3, wherein the determining a boundary value of a first element in the feature map comprises:
inputting the feature map into an entropy estimation network, wherein the entropy estimation network outputs a probability distribution model of the first element and the boundary value of the first element.

8. A decoding method, wherein the method comprises:

obtaining a bitstream, wherein the bitstream comprises information obtained through encoding a plurality of elements;
determining whether a first element in the bitstream is an out-of-bounds element, wherein the first element is any one of the plurality of elements; and
if the first element is the out-of-bounds element, performing variable-length code decoding on information obtained through encoding the first element, to obtain the first element; or
if the first element is not the out-of-bounds element, performing entropy decoding on the information obtained through encoding the first element, to obtain the first element.

9. The method according to claim 8, wherein the determining whether a first element in the bitstream is an out-of-bounds element comprises:
if the bitstream comprises flag information indicating that the first element is the out-of-bounds element, determining that the first element is the out-of-bounds element.

10. The method according to claim 8 or 9, wherein the performing variable-length code decoding on information obtained through encoding the first element, to obtain the first element comprises:

determining a boundary value of the first element;
performing variable-length code decoding on the information obtained through encoding the first element, to obtain a difference, wherein the difference is a difference between the first element and an upper boundary value in the boundary value, or is a difference between the first element and a lower boundary value in the boundary value; and

determining the first element based on the boundary value and the difference.

11. The method according to claim 10, wherein the determining a boundary value of the first element comprises:

determining a probability distribution model of the first element; and
determining the boundary value of the first element based on the probability distribution model of the first element.

12. The method according to claim 11, wherein the determining the boundary value of the first element based on the probability distribution model of the first element comprises:
determining the boundary value of the first element based on a variance of the probability distribution model of the first element.

13. The method according to claim 12, wherein the boundary value comprises the upper boundary value and/or the lower boundary value;

the upper boundary value in the boundary value is $k \times \sigma$, and/or the lower boundary value in the boundary value is $-k \times \sigma$; and
$k$ is a constant, and $\sigma$ represents the variance of the probability distribution model.

14. The method according to claim 10, wherein the determining a boundary value of the first element comprises:
inputting the bitstream into an entropy estimation network, wherein the entropy estimation network outputs the boundary value of the first element.

15. An encoding method, wherein the method comprises:

inputting an image into an encoding network to obtain a feature map of the image, wherein the feature map comprises a plurality of elements;
determining a boundary value of a first element in the feature map, wherein the first element is any one of the plurality of elements;
judging whether the first element is in a target range corresponding to the first element, wherein the target range is determined based on the boundary value of the first element; and
if the first element is in the target range corresponding to the first element, performing entropy encoding on the first element; or
if the first element is outside the target range corresponding to the first element, modifying the first element to the boundary value corresponding to the first element, and performing entropy encoding on the modified first element.

16. The method according to claim 15, wherein the boundary value comprises an upper boundary value and/or a lower boundary value; and
the modifying the first element to the boundary value corresponding to the first element comprises:
if the first element is greater than the upper boundary value, modifying the first element to the upper boundary value, or if the first element is less than the lower boundary value, modifying the first element to the lower boundary value.

17. The method according to claim 15 or 16, wherein the determining a boundary value of a first element in the feature map comprises:

inputting the feature map into an entropy estimation network, wherein the entropy estimation network outputs a probability distribution model of the first element in the feature map; and
determining the boundary value of the first element based on the probability distribution model of the first element.

18. The method according to claim 17, wherein the determining the boundary value of the first element based on the probability distribution model of the first element comprises:
determining the boundary value of the first element based on a variance of the probability distribution model of the first element.

19. The method according to claim 18, wherein the boundary value comprises the upper boundary value and/or the lower boundary value;

the upper boundary value in the boundary value is $k \times \sigma$, and/or the lower boundary value in the boundary value is $-k \times \sigma$; and

$k$ is a constant, and $\sigma$ represents the variance of the probability distribution model.

20. The method according to claim 15 or 16, wherein the determining a boundary value of a first element in the feature map comprises:
inputting the feature map into an entropy estimation network, wherein the entropy estimation network outputs a probability distribution model of the first element and the boundary value of the first element.

21. An encoding apparatus, wherein the apparatus comprises:

an encoding network module, configured to input an image into an encoding network to obtain a feature map of the image, wherein the feature map comprises a plurality of elements;
a determining module, configured to determine a boundary value of a first element in the feature map, wherein the first element is any one of the plurality of elements;
a judging module, configured to judge whether the first element is in a target range corresponding to the first element, wherein the target range is determined based on the boundary value of the first element; and
an encoding module, configured to: when the first element is in the target range corresponding to the first element, perform entropy encoding on the first element; or when the first element is outside the target range corresponding to the first element, mark the first element as an out-of-bounds element, and perform variable-length code encoding on the first element.

22. The apparatus according to claim 21, wherein when marking the first element as the out-of-bounds element, the encoding module is specifically configured to:
encode, into a bitstream, flag information indicating that the first element is the out-of-bounds element.

23. The apparatus according to claim 21 or 22, wherein the boundary value comprises an upper boundary value and/or a lower boundary value; and
when performing variable-length code encoding on the first element, the encoding module is specifically configured to:

if the first element is greater than the upper boundary value, determine a first difference between the first element and the upper boundary value, and perform variable-length code encoding on the first difference; or
if the first element is less than the lower boundary value, determine a second difference between the first element and the lower boundary value, and perform variable-length code encoding on the second difference.

24. The apparatus according to any one of claims 21 to 23, wherein when determining the boundary value of the first element in the feature map, the determining module is specifically configured to:

input the feature map into an entropy estimation network, wherein the entropy estimation network outputs a probability distribution model of the first element in the feature map; and
determine the boundary value of the first element based on the probability distribution model of the first element.

25. The apparatus according to claim 24, wherein when determining the boundary value of the first element based on the probability distribution model of the first element, the determining module is specifically configured to:
determine the boundary value of the first element based on a variance of the probability distribution model of the first element.

26. The apparatus according to claim 25, wherein the boundary value comprises the upper boundary value and/or the lower boundary value;

the upper boundary value in the boundary value is $k \times \sigma$, and/or the lower boundary value in the boundary value is $-k \times \sigma$; and
$k$ is a constant, and $\sigma$ represents the variance of the probability distribution model.

27. The apparatus according to any one of claims 21 to 23, wherein when determining the boundary value of the first element in the feature map, the determining module is specifically configured to:

input the feature map into an entropy estimation network, wherein the entropy estimation network outputs a probability distribution model of the first element and the boundary value of the first element.

28. A decoding apparatus, wherein the apparatus comprises:

an obtaining module, configured to obtain a bitstream, wherein the bitstream comprises information obtained through encoding a plurality of elements;

a determining module, configured to determine whether a first element in the bitstream is an out-of-bounds element, wherein the first element is any one of the plurality of elements; and

a decoding module, configured to: when the first element is the out-of-bounds element, perform variable-length code decoding on information obtained through encoding the first element, to obtain the first element; or when the first element is not the out-of-bounds element, perform entropy decoding on information obtained through encoding the first element, to obtain the first element.

29. The apparatus according to claim 28, wherein when determining whether the first element in the bitstream is the out-of-bounds element, the determining module is specifically configured to:
if the bitstream comprises flag information indicating that the first element is the out-of-bounds element, determine that the first element is the out-of-bounds element.

30. The apparatus according to claim 28 or 29, wherein when performing the variable-length code decoding on the information obtained through encoding the first element, to obtain the first element, the decoding module is specifically configured to:

determine a boundary value of the first element;

perform variable-length code decoding on the information obtained through encoding the first element, to obtain a difference, wherein the difference is a difference between the first element and an upper boundary value in the boundary value, or is a difference between the first element and a lower boundary value in the boundary value; and

determine the first element based on the boundary value and the difference.

31. The apparatus according to claim 30, wherein when determining the boundary value of the first element, the decoding module is specifically configured to:

determine a probability distribution model of the first element; and

determine the boundary value of the first element based on the probability distribution model of the first element.

32. The apparatus according to claim 31, wherein when determining the boundary value of the first element based on the probability distribution model of the first element, the decoding module is specifically configured to:
determine the boundary value of the first element based on a variance of the probability distribution model of the first element.

33. The apparatus according to claim 32, wherein the boundary value comprises the upper boundary value and/or the lower boundary value;

the upper boundary value in the boundary value is $k \times \sigma$, and/or the lower boundary value in the boundary value is $-k \times \sigma$; and

$k$ is a constant, and $\sigma$ represents the variance of the probability distribution model.

34. The apparatus according to claim 30, wherein when determining the boundary value of the first element, the decoding module is specifically configured to:
input the bitstream into an entropy estimation network, wherein the entropy estimation network outputs the boundary value of the first element.

35. An encoder, comprising a processing circuit, configured to perform the encoding method according to any one of claims 1 to 7, or configured to perform the encoding method according to any one of claims 15 to 20.

36. A decoder, comprising processing circuit, configured to perform the decoding method according to any one of claims 8 to 14.

**37.** An encoder, comprising:

one or more processors; and
a computer-readable storage medium coupled to the one or more processors, wherein the computer-readable storage medium stores a program, and when the program is executed by the one or more processors, the encoder is enabled to perform the encoding method according to any one of claims 1 to 7, or perform the encoding method according to any one of claims 15 to 20.

**38.** A decoder, comprising:

one or more processors; and
a computer-readable storage medium coupled to the one or more processors, wherein the computer-readable storage medium storing a program, and when the program is executed by the one or more processors, the decoder is enabled to perform the decoding method according to any one of claims 8 to 14.

**39.** A computer-readable storage medium, wherein the computer-readable storage medium stores instructions, and when the instructions are run on a computer, the computer is enabled to perform the method according to any one of claims 1 to 7, 8 to 14, and 15 to 20.

**40.** A computer program product, comprising program code, wherein when the program code is executed on a computer or a processor, the program code is used to perform the method according to any one of claims 1 to 7, 8 to 14, and 15 to 20.

**41.** A computer-readable storage medium, wherein the storage medium stores a bitstream, and the bitstream is generated according to the encoding method according to any one of claims 1 to 7 and 15 to 20.

**42.** A computer-readable storage medium, wherein the computer-readable storage medium stores a bitstream comprising program code, and when the program code is executed by one or more processors, a decoder is enabled to perform the decoding method according to any one of claims 8 to 14.

FIG. 1

```
┌──────────┐     ┌──────────┐     ┌──────────┐        ╱╲
│ Encoding │ ──▶ │ Entropy  │ ──▶ │ Peak     │ ──▶   ╱    ╲  Determine,        No    ┌──────────┐
│ network  │     │estimation│     │ value    │      ╱      ╲ for each element,  ──▶ │ Entropy  │
└──────────┘     │ network  │     │calculation│    ╱  whether a peak value ╲        │ encoding │
                 └──────────┘     └──────────┘     ╲  probability P is greater╱      └──────────┘
                                                    ╲  than a threshold      ╱
                                                     ╲       P_th          ╱
                                                      ╲                   ╱
```

Determine, for each element, whether a peak value probability $P$ is greater than a threshold $P_{th}$

No → Entropy encoding

Yes → Write an element value corresponding to the peak value probability into a bitstream

Bitstream

Assign a value corresponding to a probability peak value to the element

Yes

```
┌──────────┐     ┌──────────┐        ╱╲
│ Decoding │ ◀── │ Entropy  │ ◀──   ╱  ╲  Determine,          ┌──────────┐     ┌──────────┐
│ network  │     │ encoding │  No  ╱    ╲ for each element,   │ Peak     │ ◀── │ Entropy  │
└──────────┘     └──────────┘      ╲    ╱ whether a peak value│ value    │     │estimation│
                                    ╲  ╱  probability P is     │calculation│     │ network  │
                                     ╲╱   greater than a       └──────────┘     └──────────┘
                                          threshold P_th
```

Determine, for each element, whether a peak value probability $P$ is greater than a threshold $P_{th}$

FIG. 2

FIG. 3

401

An encoder side inputs an image into an encoding network to obtain a feature map of the image, where the feature map includes a plurality of elements

402

The encoder side determines a boundary value of a first element in the feature map, where the first element is any one of the plurality of elements

403

The encoder side determines whether the first element is in a target range corresponding to the first element

Yes

No

404a

The encoder side performs entropy encoding on the first element

404b

The encoder side modifies the first element to the boundary value corresponding to the first element, and performs entropy encoding on a modified first element

FIG. 4

conv M×5×5/2↓

GDN

conv M×5×5/2↓

GDN

conv M×5×5/2↓

GDN

conv M×5×5/2↓

(a)

Dconv M×5×5/2↑

GDN

Dconv M×5×5/2↑

GDN

Dconv M×5×5/2↑

GDN

Dconv M×5×5/2↑

(b)

FIG. 5

Encoder side                              Decoder side

conv M×5×5×2↓                          Dconv M×5×5/2↑

relu                                        relu

conv M×5×5×2↓                          Dconv M×5×5/2↑

relu                                        relu

conv M×5×5                            conv M×5×5

Factor entropy                        Factor entropy
model                                    model

(a)                                        (b)

FIG. 6

701

A decoder side obtains a bitstream, where the bitstream includes
information obtained through encoding a plurality of elements

702

The decoder side decodes the bitstream based on an entropy
estimation network, to obtain a feature map of an image

703

The decoder side inputs the feature map into a decoding network
to obtain a reconstructed image

FIG. 7

FIG. 8

baseline (model 1)
baseline+bypass5 (model 4)
baseline+bypass10 (model 5)
baseline+skip (model 2)
limitG5 (model 3)

Encoding time

BD-Rate (bit rate)

FIG. 9

1001

An encoder side inputs an image into an encoding network to obtain a feature map of the image, where the feature map includes a plurality of elements

1002

The encoder side determines a boundary value of a first element in the feature map, where the first element is any one of the plurality of elements

1003

The encoder side determines whether the first element is in a target range corresponding to the first element

Yes

No

1004a

The encoder side performs entropy encoding on the first element

1004b

The encoder side marks the first element as an out-of-bounds element, and performs variable-length code encoding on the first element

FIG. 10

1101

A decoder side obtains a bitstream, where the bitstream
includes information obtained through encoding a
plurality of elements

1102

The decoder
side determines whether a first element
in the bitstream is an out-of-bounds element, where
the first element is any one of the
plurality of elements

No

1103a

The decoder side performs
entropy decoding on
information obtained
through encoding the first
element, to obtain the first
element

Yes

1103b

The decoder side performs
variable-length code
decoding on information
obtained through encoding
the first element, to obtain
the first element

FIG. 11

1201

Encoding
network
module

1202

Determining
module

1203

Judging
module

1204

Encoding
module

FIG. 12

1301

Encoding
network
module

1302

Determining
module

1303

Judging
module

1304

Encoding
module

FIG. 13

1401         1402         1403

| Obtaining module | Determining module | Decoding module |

FIG. 14

1501

Processor

Memory    Communication interface

1504

1502        1503

FIG. 15

## INTERNATIONAL SEARCH REPORT

| International application No. |
|---|
| **PCT/CN2023/100760** |

### A. CLASSIFICATION OF SUBJECT MATTER

H04N19/13(2014.01)i;  G10L25/30(2013.01)i

According to International Patent Classification (IPC) or to both national classification and IPC

### B. FIELDS SEARCHED

Minimum documentation searched (classification system followed by classification symbols)

H04N19/-; G10L25/-

Documentation searched other than minimum documentation to the extent that such documents are included in the fields searched

Electronic data base consulted during the international search (name of data base and, where practicable, search terms used)

CNABS, CNTXT, ENTXTC, CNKI: 熵编码, 特征, 概率, 元素, 像素, 阈值, 边界, 边缘, 范围, 大于, 外, 超过, 越界, 变长编码, vlc, 修改; VEN, ENTXT, IEEE: entropy coding, feature, probability, element, pixel, threshold, boundary, edge, range, greater than, out, over, out of boundary, variable length coding, vlc, modif+

### C. DOCUMENTS CONSIDERED TO BE RELEVANT

| Category* | Citation of document, with indication, where appropriate, of the relevant passages | Relevant to claim No. |
|---|---|---|
| A | CN 111988629 A (FUJITSU LTD.) 24 November 2020 (2020-11-24)<br>entire document | 1-42 |
| A | CN 114339262 A (HUAWEI TECHNOLOGIES CO., LTD.) 12 April 2022 (2022-04-12)<br>entire document | 1-42 |
| A | CN 114554205 A (HUAWEI TECHNOLOGIES CO., LTD. et al.) 27 May 2022 (2022-05-27)<br>entire document | 1-42 |
| A | US 10652581 B1 (GOOGLE L.L.C.) 12 May 2020 (2020-05-12)<br>entire document | 1-42 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 September 2023** | **06 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/100760**

| Patent document cited in search report | | | Publication date (day/month/year) | Patent family member(s) | | | Publication date (day/month/year) |
|---|---|---|---|---|---|---|---|
| CN | 111988629 | A | 24 November 2020 | JP | 2020191077 | A | 26 November 2020 |
| | | | | US | 2020374522 | A1 | 26 November 2020 |
| | | | | US | 11184615 | B2 | 23 November 2021 |
| CN | 114339262 | A | 12 April 2022 | WO | 2022068716 | A1 | 07 April 2022 |
| | | | | CN | 114339262 | B | 14 February 2023 |
| CN | 114554205 | A | 27 May 2022 | CN | 114554205 | B | 10 March 2023 |
| US | 10652581 | B1 | 12 May 2020 | WO | 2020176144 | A1 | 03 September 2020 |
| | | | | EP | 3932055 | A1 | 05 January 2022 |
| | | | | US | 2020275130 | A1 | 27 August 2020 |
| | | | | US | 11259053 | B2 | 22 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210806919